# EUROPEAN PATENT SPECIFICATION

(11) **EP 4 160 896 B1**
(45) Date of publication and mention of the grant of the patent: **13.08.2025**
(21) Application number: 20953619.2
(22) Date of filing: 17.09.2020
(51) Int. Cl.: H02M 3/158, H02M 3/07, H02M 3/00, H02M 1/00

(54) **PHOTOVOLTAIC SYSTEM, AND RESONANT SWITCHED CAPACITOR CONVERTER AND CONTROL METHOD**
FOTOVOLTAISCHES SYSTEM UND RESONANTER SCHALTKONDENSATORWANDLER UND STEUERUNGSVERFAHREN
SYSTÈME PHOTOVOLTAÏQUE ET CONVERTISSEUR À CONDENSATEUR COMMUTÉ RÉSONANT ET PROCÉDÉ DE COMMANDE

(43) Date of publication of application: 05.04.2023
(73) Proprietor: Huawei Digital Power Technologies Co., Ltd., Shenzhen, Guangdong 518043 (CN)
(72) Inventor: WANG, Zhaohui, Shenzhen, Guangdong 518129 (CN); WANG, Jun, Shenzhen, Guangdong 518129 (CN); SHI, Lei, Shenzhen, Guangdong 518129 (CN)
(74) Representative: Grünecker Patent- und Rechtsanwälte PartG mbB
(86) International application number: PCT/CN2020/115801
(87) International publication number: WO 2022/056761

(56) References cited:
- CN-A- 105 207 256
- CN-A- 107 425 722
- CN-A- 108 155 818
- CN-A- 108 539 982
- CN-A- 110 148 960
- CN-B- 105 207 256
- CN-U- 203 218 893
- US-A1- 2015 188 405
- US-A1- 2018 062 538
- US-A1- 2018 278 177
- US-A1- 2019 348 926
- US-B2- 10 014 823
- KENICHIRO SANO ET AL: "Reducing output current ripple of resonant switched-capacitor step-up converter with interleaving technique", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21 June 2010 (2010-06-21), pages 1635 - 1641, XP031729768, ISBN: 978-1-4244-5394-8
- HSIEH CHENG-HAN ET AL: "Design and Implementation of a Novel Multilevel DC-AC Inverter", IEEE TRANSACTIONS ON INDUSTRY APPLICATIONS, IEEE SERVICE CENTER, PISCATAWAY, NJ, US, vol. 52, no. 3, 1 May 2016 (2016-05-01), pages 2436 - 2443, XP011610332, ISSN: 0093-9994, [retrieved on 20160518], DOI: 10.1109/TIA.2016.2527622
- SANO K ET AL: "A New Control Method of a Resonant Switched-Capacitor Converter and its Application to Balancing of the Split DC Voltages in a Multilevel Inverter", FOURTH POWER CONVERSION CONFERENCE, 2-5 APRIL 2007, NAGOYA, JAPAN, IEEE, PISCATAWAY, NJ, USA, 1 April 2007 (2007-04-01), pages 122 - 129, XP031178457, ISBN: 978-1-4244-0843-6, DOI: 10.1109/PCCON.2007.372957
- KENICHIRO SANO ET AL: "A new control method of a resonant switched-capacitor converter and the application for balancing of the split DC voltages in a multilevel inverter", ELECTRICAL ENGINEERING IN JAPAN, JOHN WILEY & SONS, INC, US, vol. 168, no. 2, 9 April 2009 (2009-04-09), pages 69 - 79, XP071650485, ISSN: 0424-7760, DOI: 10.1002/EEJ.20719
- HSIEH CHENG-HAN ET AL: "Design and implementation of a novel multilevel DC-AC inverter", 2014 IEEE ENERGY CONVERSION CONGRESS AND EXPOSITION (ECCE), IEEE, 14 September 2014 (2014-09-14), pages 5743 - 5748, XP032681098, DOI: 10.1109/ECCE.2014.6954189
- ITO T ET AL: "An investigation of voltage balancing circuit for DC capacitors in diode-clamped multilevel inverters to realize high output power density converters", ENERGY CONVERSION CONGRESS AND EXPOSITION (ECCE), 2010 IEEE, IEEE, PISCATAWAY, NJ, USA, 12 September 2010 (2010-09-12), pages 3675 - 3682, XP031787541, ISBN: 978-1-4244-5286-6
- SAGGINI STEFANO ET AL: "High current switching capacitor converter for on-package VR", 2018 IEEE APPLIED POWER ELECTRONICS CONFERENCE AND EXPOSITION (APEC), IEEE, 4 March 2018 (2018-03-04), pages 1187 - 1191, XP033347397, DOI: 10.1109/APEC.2018.8341166

## Description

### TECHNICAL FIELD

This application relates to the field of photovoltaic power generation technologies, and in particular, to a photovoltaic system, a resonant switched capacitor converter, and a control method.

### BACKGROUND

Conventional direct current/direct current DC/DC converters include circuits such as a boost circuit and a buck circuit, but electric energy conversion efficiency of these circuits is relatively low.

Currently, to improve electric energy conversion efficiency of the DC/DC converter, switched capacitor circuits (SCC) are used in a growing quantity of fields. The SCC is a type of DC/DC conversion circuit, and uses a semiconductor switching component and a low-loss capacitor energy storage element to implement fixed-proportion voltage conversion. The SCC has higher electric energy conversion efficiency than the conventional DC/DC conversion circuit such as a boost circuit.

However, currently, the SCC works in an open-loop control mode, and therefore flexibility is relatively low. For example, in a DC/DC converter including a plurality of SCCs connected in parallel, a current of each SCC is usually uncontrollable.

### SUMMARY

This application provides a photovoltaic system, a resonant switched capacitor converter, and a control method, to ensure current equalization between a plurality of SCC circuits. The invention is defined by a system according to claim 1 and by a method claim 11. Advantageous aspects of the invention are defined in the dependent claims.

An embodiment of this application provides a photovoltaic power generation system, including a DC/DC converter, a resonant switched capacitor converter, an inverter, and a controller. An input terminal of the DC/DC converter is connected to a photovoltaic array, a first input terminal of the resonant switched capacitor converter is connected to a positive output terminal of the DC/DC converter, and a second input terminal of the resonant switched capacitor converter is connected to a negative output terminal of the DC/DC converter. A first output terminal of the resonant switched capacitor converter is connected to a neutral wire of the inverter, and a second output terminal of the resonant switched capacitor converter is connected to a negative bus of the inverter. In other words, the resonant switched capacitor converter is used to provide a negative voltage required by the inverter between the neutral wire and the negative input terminal of the inverter. The resonant switched capacitor converter implements direct current voltage to direct current voltage conversion. The resonant switched capacitor converter has higher electric energy conversion efficiency than a conventional DC/DC converter.

To reduce a switching loss and implement soft switching, a capacitor and an inductor in the resonant switched capacitor converter are connected in series to form an LC resonant circuit. The resonant switched capacitor converter includes at least two RSCCs connected in parallel, and adjusts a phase shift angle between drive signals corresponding to the two RSCCs based on a current difference between the two RSCCs, so that currents of the two RSCCs are equal, in other words, current equalization is implemented. When a phase shift is performed on the drive signal of the RSCC, a resonance start moment of a resonant cavity of the LC resonant circuit may be changed. Because different resonance start moments lead to different voltage differences between an input filter capacitor and an output filter capacitor, the currents of the two RSCCs can be consistent with each other, and current equalization control can be implemented, so that energy of each RSCC is fully utilized, and an RSCC circuit is prevented from being damaged due to overload. In this solution, because drive signals of two independent RSCCs are adjusted to perform a phase shift, a soft switching characteristic of a switching transistor of a single RSCC is not affected, so that a switching damage is reduced, and power conversion efficiency is improved. The resonant switched capacitor converter includes a plurality of resonant switched capacitor converters RSCCs connected in parallel, for example, at least two RSCCs connected in parallel: a first RSCC and a second RSCC. The controller adjusts a phase shift angle between a first drive signal of the first RSCC and a second drive signal of the second RSCC based on a current difference between a first current of the first RSCC and a second current of the second RSCC, so that the first current is consistent with the second current, in other words, the currents of the two RSCCs are controlled to be equal, thereby implementing current equalization between the plurality of RSCCs connected in parallel.

The first current of the first RSCC may be obtained by measuring a current of an LC resonant circuit of the first RSCC. Similarly, the second current of the second RSCC may be obtained by measuring a current of an LC resonant circuit of the second RSCC.

Preferably, the phase shift angle is positively correlated with the current difference, in other words, if the current difference between the two RSCCs is larger, the phase shift angle between the drive signals corresponding to the two RSCCs is larger. During specific implementation, a closed-loop adjustment may be performed on the current difference to adjust the phase shift angle, so that the currents of the two RSCCs are equal. For example, specifically, the current difference between the first current and the second current may be obtained, and a proportional integral PI adjustment may be performed on the current difference to obtain a dynamically adjustable angle of the phase shift angle. The dynamically adjustable angle is positively correlated with the difference. A specific value of the phase shift angle may be generated by a phase shift angle generator based on a result of the PI adjustment. The phase shift angle generator may generate the specific value of the phase shift angle by changing an initial value of a carrier or adjusting a value of a comparison value.

Preferably, the controller adjusts a phase of at least one of the first drive signal and the second drive signal to adjust the phase shift angle between the first drive signal and the second drive signal. For example, the controller adjusts only a phase of the first drive signal while a phase of the second drive signal is fixed, to adjust the phase shift angle. In addition, the controller adjusts only a phase of the second drive signal while a phase of the first drive signal is fixed, to adjust the phase shift angle. In addition, the controller may alternatively adjust phases of the first drive signal and the second drive signal, so that the phases are separately shifted in opposite directions to implement an adjustment to the phase shift angle.

Preferably, the phase shift angle between the first drive signal and the second drive signal may be 0 before the first drive signal and the second drive signal are adjusted, in other words, in-phase control is performed on the drive signals of the two RSCCs. The phase shift angle is a sum of a preset fixed angle and the dynamically adjustable angle, and the preset fixed angle is 0. In this case, the phase shift angle is equal to the dynamically adjustable angle, and the controller adjusts the dynamically adjustable angle based on the current difference to adjust the phase shift angle.

Preferably, when the phase shift angle is equal to the dynamically adjustable angle, the controller is specifically configured to: when the second current is less than the first current, control the phase of the second drive signal to lead the phase of the first drive signal by the dynamically adjustable angle; or when the second current is greater than the first current, control the phase of the second drive signal to lag behind the phase of the first drive signal by the dynamically adjustable angle.

The foregoing describes a scenario in which in-phase control is performed when phases of drive signals of controllable switching transistors at a same position on a first bridge arm and a third bridge arm are not shifted. The following describes a case in which interleaving control is performed on the drive signals of the controllable switching transistors at the same position on the first bridge arm and the third bridge arm. Because interleaving control is performed on switching transistors in the two RSCCs, and interleaving control can effectively reduce a current of an input filter capacitor and a current of an output filter capacitor, a relatively small filter capacitor may be used to reduce a volume occupied by the filter capacitor. Preferably, the phase shift angle is a sum of a preset fixed angle and the dynamically adjustable angle, and the preset fixed angle is 360°/N. N is a quantity of RSCCs connected in parallel, and N is an integer greater than 1. The controller adjusts the dynamically adjustable angle based on the current difference and the preset fixed angle to adjust the phase shift angle. For example, when two RSCCs are connected in parallel, a phase shift angle between drive signals corresponding to the two RSCCs is 180 degrees before the phase shift angle between the two drive signals is adjusted. When currents of the two RSCCs are not equal, the controller adjusts the dynamically adjustable angle based on the phase shift angle of 180°, so that the currents of the two RSCCs are equal.

Preferably, when interleaving control is performed on drive signals corresponding to a plurality of RSCCs, the controller is specifically configured to: when the second current is less than the first current, control the phase of the second drive signal to lag behind the phase of the first drive signal by the dynamically adjustable angle; or when the second current is greater than the first current, control the phase of the second drive signal to lead the phase of the first drive signal by the dynamically adjustable angle.

When N RSCCs are connected in parallel, a current of a resonant inductor of each RSCC needs to be detected, and an average current value of the N RSCCs is obtained through arithmetic averaging, in other words, the controller obtains an average current value of resonant circuits of the N RSCC circuits, fixes a phase of a drive signal of one of the RSCC circuits, separately compares currents of resonant circuits of the other N-1 RSCCs with the average current value, obtains respective dynamically adjustable angles based on respective comparison results, and shifts phases of drive signals of the N-1 RSCCs based on the respective dynamically adjustable angles. In other words, closed-loop control is performed on the N-1 RSCCs based on differences between currents of resonant inductors of the N-1 RSCCs and the average current value to implement current equalization control on the N RSCCs.

During specific control, a manner of fixing a phase of a drive signal of one of the RSCCs while performing phase shift control on the drive signals of the other N-1 RSCCs may still be used. For example, a phase of a drive signal of RSCC-A is fixed, currents of resonant circuits of RSCC-B to RSCC-N are separately compared with the average current value, a difference corresponding to each RSCC is obtained, and corresponding closed-loop control is performed on the RSCC based on the difference corresponding to the RSCC, in other words, dynamically adjustable angles of drive signals of RSCC-B to RSCC-N are dynamically adjusted to implement current equalization control on the RSCCs.

Preferably, when the dynamically adjustable angle increases to a specific degree, the difference between the two currents of the two RSCCs basically reaches a limit value. If the dynamically adjustable angle further increases, the currents of the two RSCCs may change in an opposite direction, leading to non-monotonicity of control and a loss of a control capability. Therefore, in actual application, an amplitude of the dynamically adjustable angle may be limited, in other words, a maximum value of the dynamically adjustable angle needs to be limited. When the dynamically adjustable angle reaches a preset threshold angle, the dynamically adjustable angle remains at the preset threshold angle. That is, the controller is further configured to: when the dynamically adjustable angle is greater than the preset threshold angle, control a phase difference to be a sum of the preset fixed angle and the preset threshold angle. The preset threshold angle is a preset maximum upper limit value of the dynamically adjustable angle. The controller is further configured to: when the dynamically adjustable angle is greater than the preset threshold angle, control the dynamically adjustable angle to be the preset threshold angle. When the controller adjusts a phase of one of the first drive signal and the second drive signal to adjust the dynamically adjustable angle, the preset threshold angle is less than or equal to 30°. Preferably, when the controller adjusts the phase of the first drive signal and the phase of the second drive signal to adjust the dynamically adjustable angle, the preset threshold angle is less than or equal to 15°.

The following provides specific example architectures of resonant switched capacitor converters corresponding to two different LC resonant circuits.

### Architecture 1

The first RSCC includes a first bridge arm, a second bridge arm, and a first LC resonant circuit, and the second RSCC includes a third bridge arm, a fourth bridge arm, and a second LC resonant circuit. Both a first terminal of the first bridge arm and a first terminal of the third bridge arm are connected to the first input terminal of the resonant switched capacitor converter, and both a second terminal of the first bridge arm and a second terminal of the third bridge arm are connected to the second input terminal of the resonant switched capacitor converter. Both a first terminal of the second bridge arm and a first terminal of the fourth bridge arm are connected to the first output terminal of the resonant switched capacitor converter, and both a second terminal of the second bridge arm and a second terminal of the fourth bridge arm are connected to the second output terminal of the resonant switched capacitor converter. The first LC resonant circuit is connected between a midpoint of the first bridge arm and a midpoint of the second bridge arm, and the second LC resonant circuit is connected between a midpoint of the third bridge arm and a midpoint of the fourth bridge arm.

### Architecture 2

The first RSCC includes a first bridge arm, a second bridge arm, and a first LC resonant circuit, and the second RSCC includes a third bridge arm, a fourth bridge arm, and a second LC resonant circuit. Both a first terminal of the first bridge arm and a first terminal of the third bridge arm are connected to the first input terminal of the resonant switched capacitor converter, a second terminal of the first bridge arm is connected to a first terminal of the second bridge arm, a second terminal of the third bridge arm is connected to a first terminal of the fourth bridge arm, and both a second terminal of the second bridge arm and a second terminal of the fourth bridge arm are connected to the second output terminal of the resonant switched capacitor converter. A resonant capacitor of the first LC resonant circuit is connected between a midpoint of the first bridge arm and a midpoint of the second bridge arm, and a resonant capacitor of the second LC resonant circuit is connected between a midpoint of the third bridge arm and a midpoint of the fourth bridge arm. A resonant inductor of the first LC resonant circuit is connected between the second terminal of the first bridge arm and the second input terminal of the resonant switched capacitor converter, and a resonant inductor of the second LC resonant circuit is connected between the second terminal of the third bridge arm and the second input terminal of the resonant switched capacitor converter.

Preferably, to enable energy to flow bidirectionally, that is, to be transferred from a positive bus to a negative bus or from a negative bus to a positive bus, switching components of all bridge arms are controllable switching transistors. That is, the first bridge arm includes at least a first switching transistor and a second switching transistor connected in series, the third bridge arm includes at least a third switching transistor and a fourth switching transistor connected in series, the second bridge arm includes at least a fifth switching transistor and a sixth switching transistor connected in series, and the fourth bridge arm includes at least a seventh switching transistor and an eighth switching transistor connected in series.

In another implementation, except for the case in which all the bridge arms include controllable switching transistors, the second bridge arm and the fourth bridge arm may include diodes. That is, the first bridge arm includes a first switching transistor and a second switching transistor connected in series, the third bridge arm includes a third switching transistor and a fourth switching transistor connected in series, the second bridge arm includes at least a first diode and a second diode connected in series, and the fourth bridge arm includes at least a third diode and a fourth diode connected in series.

An embodiment of this application provides a resonant switched capacitor converter, including a controller and at least the following two resonant switched capacitor circuits RSCCs connected in parallel: a first RSCC and a second RSCC. A first input terminal of the resonant switched capacitor converter is connected to a positive output terminal of a direct current power supply, and a second input terminal of the resonant switched capacitor converter is connected to a negative output terminal of the direct current power supply. The resonant switched capacitor converter is configured to convert a voltage of the direct current power supply for output. The controller is configured to adjust a phase shift angle between a first drive signal of the first RSCC and a second drive signal of the second RSCC based on a current difference between a first current of the first RSCC and a second current of the second RSCC, so that the first current is consistent with the second current. The first current of the first RSCC may be obtained by measuring a current of an LC resonant circuit of the first RSCC. Similarly, the second current of the second RSCC may be obtained by measuring a current of an LC resonant circuit of the second RSCC.

It should be noted that the resonant switched capacitor converter may be applied to the photovoltaic field, or may be applied to another scenario, for example, another scenario in which 1:1 voltage conversion needs to be performed. When the resonant switched capacitor converter is applied to the photovoltaic field, the direct current power supply may be an output of a DC/DC converter of a previous stage, and an input terminal of the DC/DC converter of the previous stage is connected to a photovoltaic array.

To reduce a switching loss and implement soft switching, a capacitor and an inductor in the resonant switched capacitor converter are connected in series to form an LC resonant circuit. The resonant switched capacitor converter includes the at least two RSCCs connected in parallel, and adjusts the phase shift angle between the drive signals corresponding to the two RSCCs based on the current difference between the two RSCCs, so that the currents of the two RSCCs are equal, in other words, current equalization is implemented. When a phase shift is performed on the drive signal of the RSCC, a resonance start moment of a resonant cavity of the LC resonant circuit may be changed. Because different resonance start moments lead to different voltage differences between an input filter capacitor and an output filter capacitor, the currents of the two RSCCs can be consistent with each other, and current equalization control can be implemented, so that energy of each RSCC is fully utilized, and an RSCC circuit is prevented from being damaged due to overload. In this solution, because drive signals of two independent RSCCs are adjusted to perform a phase shift, a soft switching characteristic of a switching transistor of a single RSCC is not affected, so that a switching damage is reduced, and power conversion efficiency is improved.

Preferably, the phase shift angle is positively correlated with the current difference, in other words, if the current difference between the two RSCCs is larger, the phase shift angle between the drive signals corresponding to the two RSCCs is larger. During specific implementation, a closed-loop adjustment may be performed on the current difference to adjust the phase shift angle, so that the currents of the two RSCCs are equal.

Preferably, the controller is specifically configured to adjust the phase shift angle between the first drive signal and the second drive signal based on the current difference, so that the first current is consistent with the second current. The phase shift angle is positively correlated with the current difference.

Preferably, the controller is specifically configured to adjust a phase of at least one of the first drive signal and the second drive signal to adjust the phase shift angle.

Preferably, the phase shift angle is a sum of a preset fixed angle and a dynamically adjustable angle, and the preset fixed angle is 0. The controller is specifically configured to adjust the dynamically adjustable angle based on the current difference to adjust the phase shift angle.

Preferably, the controller is specifically configured to: when the second current is less than the first current, control a phase of the second drive signal to lead a phase of the first drive signal by the dynamically adjustable angle; or when the second current is greater than the first current, control a phase of the second drive signal to lag behind a phase of the first drive signal by the dynamically adjustable angle.

Preferably, the phase shift angle is a sum of a preset fixed angle and a dynamically adjustable angle, and the preset fixed angle is 360°/N. N is a quantity of RSCCs connected in parallel, and N is an integer greater than 1. The controller is specifically configured to adjust the dynamically adjustable angle based on the current difference and the preset fixed angle to adjust the phase shift angle.

Preferably, the controller is specifically configured to: when the second current is less than the first current, control a phase of the second drive signal to lag behind a phase of the first drive signal by the dynamically adjustable angle; or when the second current is greater than the first current, control a phase of the second drive signal to lead a phase of the first drive signal by the dynamically adjustable angle.

Preferably, when the dynamically adjustable angle is greater than a preset threshold angle, the controller controls the dynamically adjustable angle to be the preset threshold angle.

An embodiment of this application further provides a current equalization control method, applied to a photovoltaic system. The photovoltaic system includes a DC/DC converter, a resonant switched capacitor converter, and an inverter. An input terminal of the DC/DC converter is connected to a photovoltaic array, a first input terminal of the resonant switched capacitor converter is connected to a positive output terminal of the DC/DC converter, and a second input terminal of the resonant switched capacitor converter is connected to a negative output terminal of the DC/DC converter. A first output terminal of the resonant switched capacitor converter is connected to a neutral wire of the inverter, a second output terminal of the resonant switched capacitor converter is connected to a negative bus of the inverter, and the resonant switched capacitor converter includes at least the following two resonant switched capacitor circuits RSCCs connected in parallel: a first RSCC and a second RSCC. The method includes: obtaining a first current of the first RSCC, and obtaining a second current of the second RSCC; and adjusting a phase shift angle between a first drive signal of the first RSCC and a second drive signal of the second RSCC based on a current difference between the first current of the first RSCC and the second current of the second RSCC, so that the first current is consistent with the second current.

The method is applied to the resonant switched capacitor converter provided in the foregoing embodiment, and the resonant switched capacitor converter includes a plurality of RSCC circuits connected in parallel. A quantity of RSCCs connected in parallel is not specifically limited, and N is an integer greater than or equal to 2. In addition, all switching components of all bridge arms may be controllable switching transistors. When all the switching components of all the bridge arms are controllable switching transistors, bidirectional flowing of energy can be implemented, in other words, energy transfer from an input terminal to an output terminal can be implemented, and energy transfer from the output terminal to the input terminal can also be implemented. If energy is transferred in one direction, switching components of a second bridge arm and a fourth bridge arm may be diodes, in other words, the switching components are uncontrollable components, and only unidirectional conduction is required.

The first current of the first RSCC may be obtained by measuring a current of an LC resonant circuit of the first RSCC. Similarly, the second current of the second RSCC may be obtained by measuring a current of an LC resonant circuit of the second RSCC.

The phase shift angle is positively correlated with the current difference, in other words, if the current difference between the two RSCCs is larger, the phase shift angle between the drive signals corresponding to the two RSCCs is larger. During specific implementation, a closed-loop adjustment may be performed on the current difference to adjust the phase shift angle, so that the currents of the two RSCCs are equal.

To reduce a switching loss and implement soft switching, a capacitor and an inductor in the resonant switched capacitor converter are connected in series to form an LC resonant circuit. The resonant switched capacitor converter includes the at least two RSCCs connected in parallel, and adjusts the phase shift angle between the drive signals corresponding to the two RSCCs based on the current difference between the two RSCCs, so that the currents of the two RSCCs are equal, in other words, current equalization is implemented. When a phase shift is performed on the drive signal of the RSCC, a resonance start moment of a resonant cavity of the LC resonant circuit may be changed. Because different resonance start moments lead to different voltage differences between an input filter capacitor and an output filter capacitor, the currents of the two RSCCs can be consistent with each other, and current equalization control can be implemented, so that energy of each RSCC is fully utilized, and an RSCC circuit is prevented from being damaged due to overload. In this solution, because drive signals of two independent RSCCs are adjusted to perform a phase shift, a soft switching characteristic of a switching transistor of a single RSCC is not affected, so that a switching damage is reduced, and power conversion efficiency is improved.

Preferably, the phase shift angle is a sum of a preset fixed angle and a dynamically adjustable angle, and the preset fixed angle is 0. The adjusting a phase shift angle between a first drive signal of the first RSCC and a second drive signal of the second RSCC specifically includes: adjusting the dynamically adjustable angle between the first drive signal of the first RSCC and the second drive signal of the second RSCC.

Preferably, the adjusting the dynamically adjustable angle between the first drive signal of the first RSCC and the second drive signal of the second RSCC specifically includes: when the second current is less than the first current, adjusting a phase of the second drive signal to lead a phase of the first drive signal by the dynamically adjustable angle; or when the second current is greater than the first current, adjusting a phase of the second drive signal to lag behind a phase of the first drive signal by the dynamically adjustable angle.

Preferably, the phase shift angle is a sum of a preset fixed angle and a dynamically adjustable angle, and the preset fixed angle is 360°/N. N is a quantity of RSCCs connected in parallel, and N is an integer greater than 1. The adjusting a phase shift angle between a first drive signal of the first RSCC and a second drive signal of the second RSCC specifically includes: adjusting the dynamically adjustable angle between the first drive signal of the first RSCC and the second drive signal of the second RSCC based on the preset fixed angle to adjust the phase shift angle.

Preferably, the adjusting the dynamically adjustable angle between the first drive signal of the first RSCC and the second drive signal of the second RSCC to adjust the phase shift angle specifically includes: when the second current is less than the first current, adjusting a phase of the second drive signal to lag behind a phase of the first drive signal by the dynamically adjustable angle; or when the second current is greater than the first current, adjusting a phase of the second drive signal to lead a phase of the first drive signal by the dynamically adjustable angle.

Preferably, the method further includes: when the dynamically adjustable angle is greater than a preset threshold angle, controlling the dynamically adjustable angle to be the preset threshold angle.

It can be learned from the foregoing technical solutions that the embodiments of this application have the following advantages:

The photovoltaic system includes a resonant switched capacitor converter. The resonant switched capacitor converter is connected between an output terminal of a common DC/DC converter and an input terminal of an inverter, and is usually connected between the output terminal of the DC/DC converter and both a neutral wire and a negative bus of the inverter. The resonant switched capacitor converter is configured to: convert an output voltage of the DC/DC converter into a negative voltage, and provide the negative voltage to the neutral wire and the negative bus of the inverter to implement voltage conversion. To reduce a switching loss and implement soft switching, a capacitor and an inductor in the resonant switched capacitor converter are connected in series to form an LC resonant circuit. The resonant switched capacitor converter includes at least two RSCCs connected in parallel, and adjusts a phase shift angle between drive signals corresponding to the two RSCCs based on a current difference between the two RSCCs, so that currents of the two RSCCs are equal, in other words, current equalization is implemented. When a phase shift is performed on the drive signal of the RSCC, a resonance start moment of a resonant cavity of the LC resonant circuit may be changed. Because different resonance start moments lead to different voltage differences between an input filter capacitor and an output filter capacitor, the currents of the two RSCCs can be consistent with each other, and current equalization control can be implemented, so that energy of each RSCC is fully utilized, and an RSCC circuit is prevented from being damaged due to overload. In this solution, because drive signals of two independent RSCCs are adjusted to perform a phase shift, a soft switching characteristic of a switching transistor of a single RSCC is not affected, so that a switching damage is reduced, and power conversion efficiency is improved. In addition, the converter includes a resonant inductor, so that a current shock in a switching process can be effectively reduced, thereby protecting all electrical elements in the converter. In the resonant switched capacitor converter, a plurality of RSCCs connected in parallel can be used through phase shift control, so that a power processing capability of the entire converter is improved.

### DESCRIPTION OF DRAWINGS

FIG. 1 is a schematic diagram of a resonant switched capacitor circuit according to an embodiment of this application;
FIG. 2 is a sequence diagram of drive signals and a current of a resonant inductor that correspond to FIG. 1;
FIG. 3 is a schematic diagram of currents of two resonant circuits corresponding to a control sequence of FIG. 2;
FIG. 4 is a schematic diagram of a photovoltaic system according to an embodiment of this application;
FIG. 5 is a schematic diagram of charging an LC resonant circuit according to an embodiment of this application;
FIG. 6 is a schematic diagram of discharging an LC resonant circuit according to an embodiment of this application;
FIG. 7 is a circuit diagram of a resonant switched capacitor converter according to an embodiment of this application;
FIG. 8 is a sequence diagram corresponding to FIG. 7 according to an embodiment of this application;
FIG. 9 is a sequence diagram in which a phase of a drive signal of S1A leads a phase of a drive signal of S1B according to an embodiment of this application;
FIG. 10 is a model diagram of closed-loop control of a phase shift according to an embodiment of this application;
FIG. 11 is a model diagram of controlling a phase of only one drive signal to be shifted according to an embodiment of this application;
FIG. 12 is a line graph of a relationship between resonant currents of two RSCCs and a phase shift angle during in-phase control according to an embodiment of this application;
FIG. 13 is a schematic diagram of another resonant switched capacitor converter according to an embodiment of this application;
FIG. 14 is a schematic diagram in which a second bridge arm and a fourth bridge arm include diodes according to an embodiment of this application;
FIG. 15 is a schematic diagram in which a first bridge arm and a third bridge arm include diodes according to an embodiment of this application;
FIG. 16 is a sequence diagram in which two RSCC circuits use complementary drive signals according to an embodiment of this application;
FIG. 17 is a model diagram of current equalization control corresponding to phase shift control according to this embodiment;
FIG. 18 is a sequence diagram in which a phase is shifted forward for RSCC-B according to this embodiment;
FIG. 19 is a sequence diagram in which a phase is shifted backward for RSCC-B according to this embodiment;
FIG. 20 is a line graph of resonant currents and a phase shift angle during interleaving control according to an embodiment of this application;
FIG. 21 is a schematic diagram of a bidirectional resonant switched capacitor converter according to an embodiment of this application;
FIG. 22 is a schematic diagram of a resonant switched capacitor converter including a plurality of RSCCs according to an embodiment of this application;
FIG. 23 is a model diagram of current equalization control corresponding to FIG. 22 according to an embodiment of this application; and
FIG. 24 is a flowchart of a current equalization control method for a converter according to an embodiment of this application.

### DESCRIPTION OF EMBODIMENTS

In an SCC, a semiconductor switching component directly performs switching between a capacitor and a voltage source, and a voltage of the capacitor does not match a voltage of the voltage source, resulting in a severe current shock and quite loud circuit noise. For ease of description, the semiconductor switching component is simply referred to as a switching component below.

To suppress the foregoing current shock, an embodiment of this application provides a resonant switched capacitor circuit (Resonant Switched Capacitor Circuit, RSCC). A resonant inductor with a small capacity is introduced into the SCC to obtain the RSCC. The RSCC can significantly suppress the current shock in the switching process and implement soft switching of the switching component, to reduce a switching loss of the switching component, improve conversion efficiency, and also reduce circuit noise.

To apply the RSCC circuit to high power conversion, a plurality of RSCC circuits need to be connected in parallel for use because of limitations of a capacity of a single switching component and a capacity and a technology of a passive component.

The RSCC circuit is configured to convert a direct current input voltage into a preset-proportion direct current output voltage. Different from a conventional buck circuit and boost circuit, the RSCC circuit has a resonant inductor whose inductance is relatively small, causing a poor current control capability of the circuit. Therefore, in the conventional RSCC circuit, open-loop control is usually performed to implement fixed-proportion voltage conversion. When the RSCC circuit is applied to a photovoltaic power generation system, an input terminal of the RSCC used as a DC/DC converter may be connected to a photovoltaic array, and an output terminal is connected to an inverter. In addition, for some photovoltaic power generation systems, the RSCC may be located in a combiner box to implement a DC/DC conversion function. In addition to the photovoltaic power generation field, the RSCC may be applied to another scenario, for example, the communication power supply field, in which the DC/DC conversion function is required.

To enable persons skilled in the art to better understand the technical solution provided in this embodiment of this application, the following first uses two RSCC circuits connected in parallel as an example to describe a working principle of a resonant switched capacitor converter. A quantity of RSCC circuits connected in parallel is not specifically limited in this application. For example, N RSCC circuits are connected in parallel. N may be an integer greater than or equal to 2.

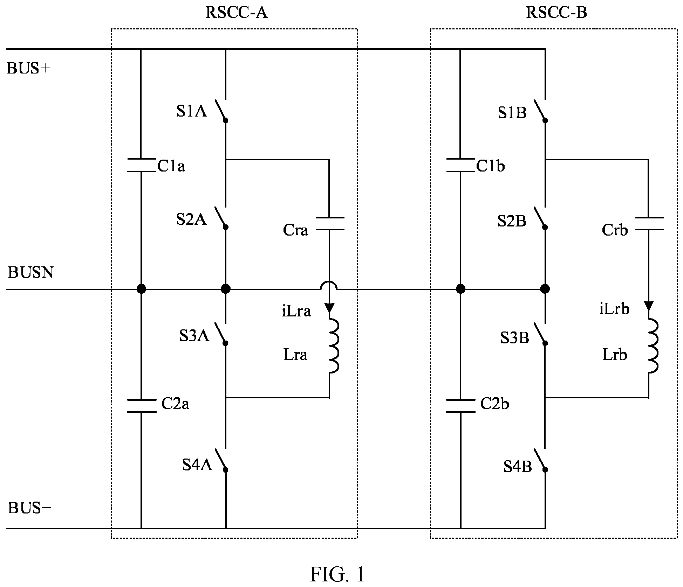

As shown in FIG. 1, the resonant switched capacitor converter includes two RSCCs connected in parallel: RSCC-A and RSCC-B.

RSCC-A includes a first bridge arm, a second bridge arm, and a first LC resonant circuit. The first bridge arm includes two switching transistors S1A and S2A connected in series, and the second bridge arm includes two switching transistors S3A and S4A connected in series. S1A and S2A are connected in series and then are connected between a positive bus BUS+ and a neutral wire BUSN, and S3A and S4A are connected in series and then are connected between BUSN and a negative bus BUS-.

In RSCC-A, the first LC resonant circuit includes a resonant capacitor Cra and a resonant inductor Lra connected in series, and Cra and Lra are connected in series and then are connected between a midpoint of the first bridge arm and a midpoint of the second bridge arm. The midpoint of the first bridge arm refers to a common terminal of S1A and S2A, and the midpoint of the second bridge arm refers to a common terminal of S3A and S4A. A resonant current of the first LC resonant circuit is iLra.

Taking the resonant switched capacitor converter as a whole, BUS+ and BUSN are respectively a first input terminal and a second input terminal of the converter, and BUSN and BUS- are respectively a first output terminal and a second output terminal of the converter. In other words, the converter can convert, for output from the first output terminal and the second output terminal, a direct current voltage input by the first input terminal and the second input terminal.

Similarly, RSCC-B includes a third bridge arm, a fourth bridge arm, and a second LC resonant circuit. The first bridge arm includes two switching transistors S1B and S2B connected in series, and the second bridge arm includes two switching transistors S3B and S4B connected in series. S1B and S2B are connected in series and then are connected between the positive bus BUS+ and the neutral wire BUSN, and S3B and S4B are connected in series and then are connected between BUSN and the negative bus BUS-.

In RSCC-B, the second LC resonant circuit includes a resonant capacitor Crb and a resonant inductor Lrb connected in series, and Crb and Lrb are connected in series and then are separately connected between a midpoint of the third bridge arm and a midpoint of the fourth bridge arm. The midpoint of the third bridge arm refers to a common terminal of S1B and S2B, and the midpoint of the fourth bridge arm refers to a common terminal of S3B and S4B. A resonant current of the second LC resonant circuit is iLrb.

A capacitor C1a is connected in parallel to two terminals of the first bridge arm, and is an input filter capacitor of RSCC-A. A capacitor C2a is connected in parallel to two terminals of the second bridge arm, and is an output filter capacitor of RSCC-A. A capacitor C1b is connected in parallel to two terminals of the third bridge arm, and is an input filter capacitor of RSCC-B. A capacitor C2b is connected in parallel to two terminals of the fourth bridge arm, and is an output filter capacitor of RSCC-B.

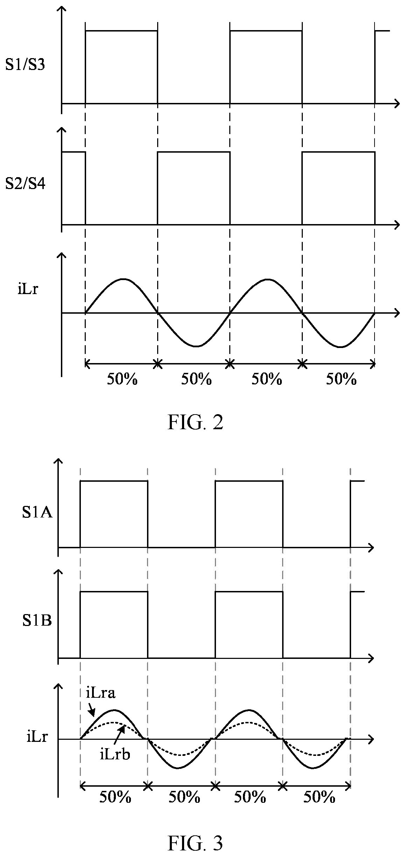

In a conventional RSCC circuit, open-loop control is usually performed. As shown in FIG. 2, each switching component is driven in an open-loop manner at a duty cycle of 50%, S1 and S2 of the first bridge arm are complementarily driven, S3 and S4 of the second bridge arm are complementarily driven, S1 and S3 are synchronously driven, and S2 and S4 are synchronously driven. Series resonance occurs on Lr and Cr, and the current of the inductor presents a sinusoidal characteristic. When a switching frequency and a resonant frequency are the same, all switching components implement zero-current switching, so that a switching loss can be effectively reduced.

When a plurality of RSCC circuits are connected in parallel, a specific tolerance exists in both the inductor and the capacitor, and is typically -10% to +10%. Therefore, serious current non-equalization exists between different RSCC circuits. For example, as shown in FIG. 3, a resonant inductance of RSCC-A is 10% lower, a resonant inductance of RSCC-B is 10% higher, and the two RSCC circuits have same Cr, in other words, Cra is equal to Crb. Because the two RSCC circuits are synchronously switched, and impedance of a resonant cavity of RSCC-A is less than impedance of a resonant cavity of RSCC-B, the current iLra of the resonant inductor of RSCC-A is significantly greater than the current iLrb of the resonant inductor of RSCC-B.

Therefore, current non-equalization exists between the two RSCC circuits connected in parallel, and one current may be several times larger than the other current. Consequently, an RSCC circuit with a larger current is overpowered, a working margin of a switching component may be seriously exceeded, and the circuit is burnt, while an RSCC with a smaller current is underpowered, and is not fully utilized.

To resolve the foregoing problem of current non-equalization between the plurality of RSCCs connected in parallel in the resonant switched capacitor converter, an embodiment of this application provides a photovoltaic system, including a resonant switched capacitor converter, to implement current equalization between a plurality of RSCCs connected in parallel in the resonant switched capacitor converter. The following describes a system embodiment, and implementations of the resonant switched capacitor converter are described together in the system embodiment.

### System Embodiment

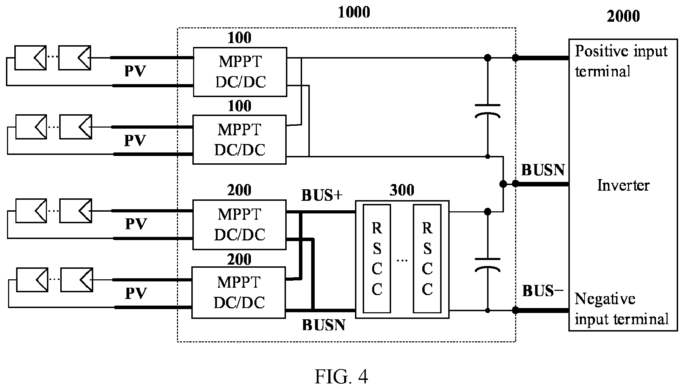

FIG. 4 is a schematic diagram of a photovoltaic system according to an embodiment of this application.

The photovoltaic power generation system provided in this embodiment includes a resonant switched capacitor converter 300, MPPT DC/DC converters 200 connected to the resonant switched capacitor converter 300, an inverter 2000, and a controller (not shown in the figure), and further includes MPPT DC/DC converters 100 directly connected to an input terminal of the inverter 2000.

In this embodiment, an example in which the DC/DC converter 200 has a maximum power point tracking (MPPT, Maximum Power Point Tracking) function is used for description. Certainly, a common DC/DC converter, namely, a DC/DC converter without the MPPT function, may be alternatively used.

It may be understood that, to improve an output capability, an example in which output terminals of two DC/DC converters 100 are connected in parallel and output terminals of two DC/DC converters 200 are connected in parallel is used. Certainly, output terminals of more DC/DC converters may be alternatively connected in parallel.

Both an input terminal of the DC/DC converter 100 and an input terminal of the DC/DC converter 200 are connected to a photovoltaic PV array.

A first input terminal of the resonant switched capacitor converter 300 is connected to a positive output terminal, namely, BUS+, of the DC/DC converter 200. A second input terminal of the resonant switched capacitor converter 300 is connected to a negative output terminal, namely, BUSN, of the DC/DC converter 200.

A first output terminal of the resonant switched capacitor converter 300 is connected to a neutral wire, namely, BUSN, of the inverter 2000, and a second output terminal of the resonant switched capacitor converter 300 is connected to a negative bus, namely, BUS-, of the inverter 2000.

The resonant switched capacitor converter 300 includes at least the following two resonant switched capacitor circuits RSCCs connected in parallel: a first RSCC and a second RSCC.

The controller adjusts a phase shift angle between a first drive signal of the first RSCC and a second drive signal of the second RSCC based on a current difference between a first current of the first RSCC and a second current of the second RSCC, so that the first current is consistent with the second current.

FIG. 4 is described by using an example in which the photovoltaic system includes a combiner box 1000. The resonant switched capacitor converter 300 is disposed in the combiner box 1000. FIG. 4 is only a schematic diagram. Only the MPPT DC/DC converter 100 needs to be connected between the photovoltaic array and both a positive input terminal and the neutral wire BUSN of the inverter 2000. Both the MPPT DC/DC converter 200 and the resonant switched capacitor converter 300 are connected between the photovoltaic array and both the neutral wire BUSN and the negative input terminal (namely, BUS-) of the inverter 2000. The resonant switched capacitor converter 300 is configured to convert an output voltage of the MPPT DC/DC converter 200 into a corresponding voltage between the neutral wire and the negative bus of the inverter 2000.

It should be noted that the positive bus BUS+ connected to the first input terminal of the resonant switched capacitor converter 300 is different from a bus connected to the positive input terminal of the inverter 2000. However, the neutral wire of the inverter 2000 is same as a neutral wire of the resonant switched capacitor converter 300, and the neutral wire of the inverter 2000 and the neutral wire of the resonant switched capacitor converter 300 are connected together and have equal reference potentials.

As shown in FIG. 4, the photovoltaic PV array is connected to the input terminal of the MPPT DC/DC converter 200, and an output terminal of the MPPT DC/DC converter 200 is connected to an input terminal of the resonant switched capacitor converter 300. The resonant switched capacitor converter 300 includes a plurality of RSCC circuits connected in parallel. Output terminals of the two MPPT DC/DC converters 200 are connected in parallel, and the output terminals connected in parallel are connected between the neutral wire and the negative bus of the input terminal of the inverter 2000.

In addition, the photovoltaic system provided in this embodiment of this application may further include an energy storage circuit, to implement energy storage while implementing grid-connected power generation, in other words, to implement photovoltaic and energy storage integration.

In the photovoltaic system provided in this embodiment, the resonant switched capacitor converter is used to implement direct current to direct current voltage conversion. As shown in FIG. 4, the resonant switched capacitor converter 300 can convert the output voltage of the MPPT DC/DC converter 200 into a 1:1 negative voltage, and provide the negative voltage to the inverter 2000, in other words, provide a negative voltage between the neutral wire and the negative bus of the inverter 2000. Generally, a positive voltage exists between the neutral wire and the positive input terminal of the inverter 2000, and a negative voltage exists between the neutral wire and the negative input terminal of the inverter 2000. Because currents of all RSCCs in the resonant switched capacitor converter are equal, energy of each RSCC circuit can be more fully utilized, and an RSCC can be prevented from being damaged due to overload in a case of current non-equalization. In this solution, because drive signals of two independent RSCCs are adjusted to perform a phase shift, a soft switching characteristic of a switching transistor of a single RSCC is not affected, so that a switching damage is reduced, and power conversion efficiency is improved.

With reference to the accompanying drawings, the following describes in detail a working principle of a resonant switched capacitor in the photovoltaic system provided in this embodiment of this application.

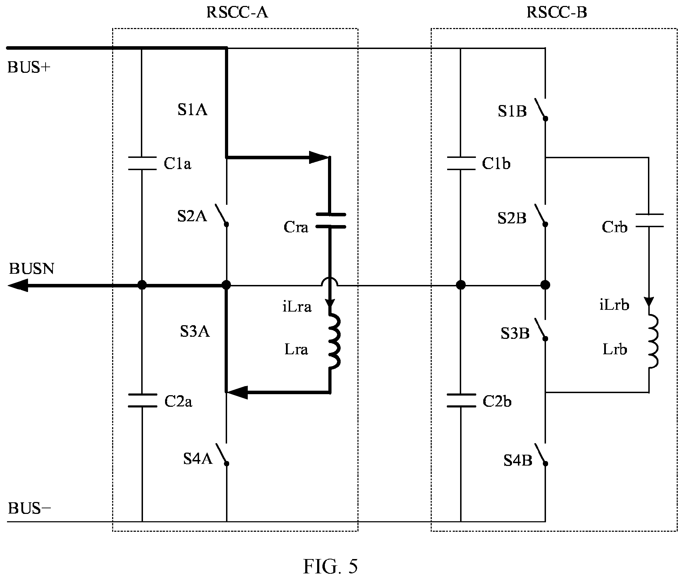

FIG. 5 is a schematic diagram of charging an LC resonant circuit according to an embodiment of this application.

For ease of description, RSCC-A is used as an example for description. RSCC-B is connected in parallel to RSCC-A, and a working principle of RSCC-B is same as that of RSCC-A. Details of the working principle of RSCC-B are not described herein again.

The following describes a charging process in which energy between BUS+ and BUSN is transferred to the LC resonant circuit.

During charging, a switch S1A in FIG. 5 is conducted, S3A is conducted, S2A is cut off, and S4A is cut off. A path of a charging current is BUS+ -> S1A -> Cra -> Lra -> S3A -> BUSN.

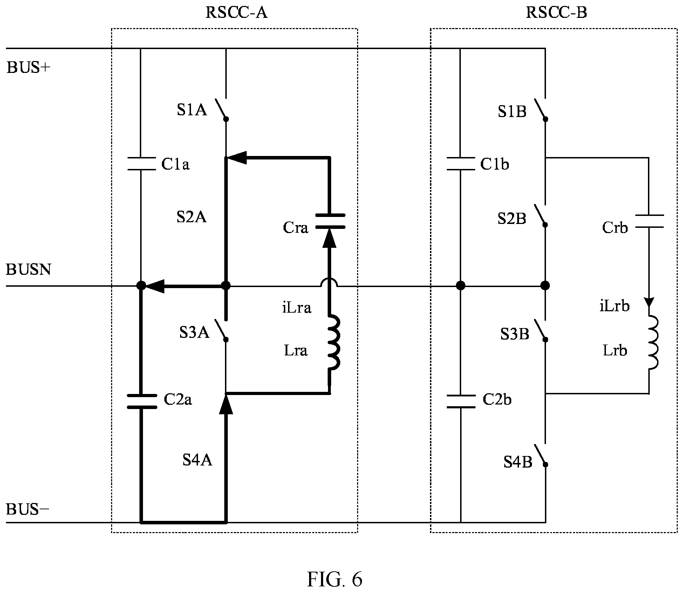

The following describes a working principle of discharging the LC resonant circuit with reference to FIG. 6.

FIG. 6 is a schematic diagram of discharging an LC resonant circuit according to an embodiment of this application.

In a discharging process, energy of the LC resonant circuit is transferred to a part between BUSN and BUS-.

During discharging, S1A in FIG. 6 is cut off, S3A is cut off, S2A is conducted, and S4A is conducted. A path of a discharging current is Cra -> S2A -> C2a -> S4A -> Lra.

It can be learned from the foregoing analysis that the charging process and the discharging process of the LC resonant circuit complete an energy transfer of a voltage from a first bus to energy of a second bus. In FIG. 6, the first bus is the positive bus BUS+, and the second bus is the negative bus BUS-. In addition, voltage conversion is completed in the transfer process due to an energy storage function of a switched capacitor C.

### Converter embodiment 1

With reference to the accompanying drawings, the following describes in detail a working principle of implementing current equalization of two or more circuits by using a resonant switched capacitor converter provided in this embodiment of this application.

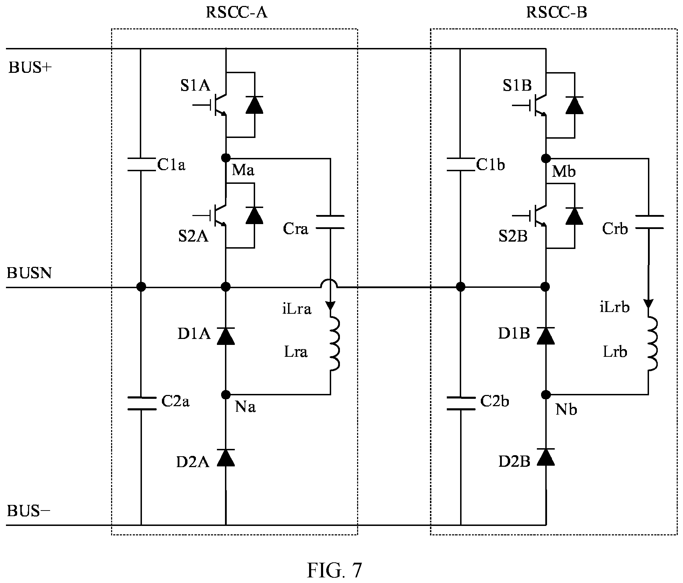

FIG. 7 is a circuit diagram of a resonant switched capacitor converter according to an embodiment of this application.

The resonant switched capacitor converter provided in this embodiment includes a controller and at least the following two resonant switched capacitor circuits RSCCs connected in parallel: a first RSCC and a second RSCC, which are respectively RSCC-A and RSCC-B in FIG. 7.

In FIG. 7, because uncontrollable diodes are used in both a second bridge arm and a fourth bridge arm, only unidirectional flow of energy can be implemented, that is, energy can be transferred from a bus corresponding to a filter capacitor C1a to a bus corresponding to a filter capacitor C2a.

The first RSCC includes a first bridge arm (S1A and S2A connected in series), the second bridge arm (D1A and D2A connected in series), and a first LC resonant circuit (Cra and Lra connected in series). The first LC resonant circuit (Cra and Lra connected in series) is connected between a midpoint Ma of the first bridge arm and a midpoint Na of the second bridge arm.

The second RSCC includes a third bridge arm (S1B and S2B connected in series), the fourth bridge arm (D1B and D2B connected in series), and a second LC resonant circuit (Cra and Crb connected in series). The second LC resonant circuit (Cra and Crb connected in series) is connected between a midpoint Mb of the third bridge arm and a midpoint Nb of the fourth bridge arm.

Both S1A and S2A are controllable switching transistors, both S1B and S2B are controllable switching transistors, both D1A and D2A are diodes, and both D1B and D2B are diodes.

Because parameters of RSCC-A and RSCC-B are discrete, for example, values of resonant inductances are different or values of resonant capacitances are different, currents of the two resonant circuits are different, and one current may be several times larger than the other current. Consequently, an RSCC with a larger current may be overpowered and the circuit may be damaged, while an RSCC with a smaller current is underpowered, and cannot be not fully utilized. Therefore, to resolve the technical problem, the technical solution provided in this embodiment of this application can implement consistency between resonant currents of a plurality of RSCC circuits connected in parallel, so that each RSCC circuit is fully utilized, and a circuit with a large current is prevented from being damaged.

Specifically, the controller (not shown in the figure) adjusts a phase shift angle between a first drive signal and a second drive signal based on a current difference between a first current of the first LC resonant circuit and a second current of the second LC resonant circuit, so that the first current is consistent with the second current.

It should be noted that, that the first current is consistent with the second current theoretically means that the first current and the second current are equal. However, an error usually exists during actual control. If an absolute value of the difference between the first current and the second current falls within a preset error range, the first current is controlled to be consistent with the second current, and the first current and the second current are considered equal. In other words, current equalization between the two RSCC circuits is implemented.

During specific control, the phase shift angle between the first drive signal of the first RSCC and the second drive signal of the second RSCC may be adjusted based on the current difference between the first current and the second current. The phase shift angle is proportional to the current difference.

The phase shift angle may include a preset fixed angle and a dynamically adjustable angle, in other words, the phase shift angle is a sum of the preset fixed angle and the dynamically adjustable angle.

In an ideal case, when discrete parameters of the first RSCC and discrete parameters of the second RSCC are completely consistent, the resonant currents of the two resonant circuits are equal, and the dynamically adjustable angle is not required, in other words, the dynamically adjustable angle is 0.

The preset fixed angle is unrelated to values of the resonant currents of the two resonant circuits, and is a preset fixed angle between the drive signals corresponding to the two RSCC circuits. The preset fixed angle may remain unchanged once being set. For example, the preset fixed angle may be 0. In an ideal case, when the dynamically adjustable angle is 0, the drive signals of the two RSCCs are synchronous, in other words, in-phase control is performed on the drive signals of the two RSCCs.

In this embodiment of this application, the dynamically adjustable angle is concerned, in other words, the controller adjusts the dynamically adjustable angle of the phase shift angle between the first drive signal and the second drive signal, so that the first current is consistent with the second current.

The dynamically adjustable angle is adjusted, so that currents of RSCCs are consistent with each other.

In addition, the preset fixed angle may be alternatively set to 360°/N. N is a quantity of RSCCs connected in parallel, and N is an integer greater than 1. For example, when N is 2, in other words, when two RSCCs are connected in parallel, the preset fixed angle is 180 degrees. When N is 3, in other words, when three RSCCs are connected in parallel, the preset fixed angle is 120 degrees. By analogy, examples are not described one by one herein. When the preset fixed angle is 360°/N, the controller adjusts the dynamically adjustable angle based on the preset fixed angle to adjust the phase shift angle, so that the first current is consistent with the second current.

During actual implementation, the controller controls a phase difference between the first drive signal and the second drive signal to be the phase shift angle, and specifically adjusts a phase of at least one of the first drive signal and the second drive signal to reach the phase difference.

Specifically, a phase of one of the drive signals may be fixed, and a phase of the other drive signal may be adjusted. Phases of the two drive signals may be alternatively adjusted, for example, the phases of the two drive signals are adjusted in opposite directions, to achieve the foregoing phase difference. The phase difference between the two drive signals is the preset fixed angle before current equalization. Therefore, during an actual adjustment, the dynamically adjustable angle may be adjusted to implement current equalization of the two RSCCs.

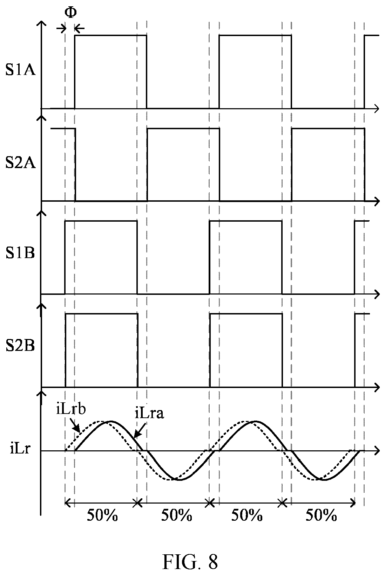

FIG. 8 is a sequence diagram corresponding to FIG. 6 according to an embodiment of this application.

In this embodiment, an example in which the preset fixed phase between the drive signals of the two RSCC circuits is 0 is used for description. In other words, a preset fixed phase between drive signals of switching transistors at a same position in the two RSCCs is 0. If the dynamically adjustable angle between the two RSCC circuits is not controlled, phases of the drive signals of the switching transistors at the same position in the two RSCC circuits are the same. In other words, when the dynamically adjustable angle is 0, S1A and S1B are conducted or cut off simultaneously, and S2A and S2B are conducted and cut off simultaneously. Because drive signals of two switching transistors of a same bridge arm need to be complementary, S1A and S2A are complementarily conducted, in other words, the two switching transistors are not conducted simultaneously. In addition, during actual control, a specific dead time exists between the two switching transistors, in other words, S2A is conducted after a preset time when S1A is cut off. Similarly, S1B and S2B are complementarily conducted.

In the RSCC circuits, S1A and S2A are complementarily driven at a duty cycle of 50%, and S1B and S2B are complementarily driven at a duty cycle of 50%. The duty cycle of 50% is a theoretical value. In actual application, a dead zone between switching transistors of a same bridge arm needs to be considered to ensure reliable commutation, and a duty cycle is usually slightly less than 50%.

The controller (not shown in the figure) is configured to: obtain the dynamically adjustable angle Φ based on the current difference between the first current iLra of the first LC resonant circuit (Cra and Lra) and the second current iLrb of the second LC resonant circuit, and control a dynamically adjustable angle between the first bridge arm and the second bridge arm to be Φ. Specifically, the phase difference between the first drive signal of the first bridge arm and the second drive signal of the second bridge arm may be the dynamically adjustable angle Φ, so that the first current is equal to the second current.

To control currents of RSCC circuits to be equal, a specific dynamically adjustable angle Φ is introduced between different RSCCs.

In FIG. 8, an example in which a phase of a drive signal of RSCC-B leads a phase of a drive signal of RSCC-A is used for description.

In other words, a phase of a drive signal of S1B leads a phase of a drive signal of S1A by the dynamically adjustable angle Φ. Because of complementary conduction, a phase of a drive signal of S2B leads a phase of a drive signal of S2A by the dynamically adjustable angle Φ. Duty cycles of S1A and S2A are the same, and duty cycles of S2A and S2B are the same.

Because a phase of a drive signal of the switching transistor is shifted, a corresponding phase shift can be performed on a current of a corresponding resonant circuit without changing a soft switching characteristic of a single RSCC circuit, so that the switching transistor can continue to implement zero-current switching, thereby ensuring efficient power conversion. Phase shift control on each RSCC circuit changes a resonance start moment of a resonant circuit, and different resonance start moments lead to different voltage differences between a filter capacitor and a switched capacitor, so that current equalization control on the RSCC circuits can be implemented.

The dynamically adjustable angle between different RSCC circuits and a phase shift direction may be determined based on closed-loop control. The dynamically adjustable angle is related to a difference between resonant currents of the two RSCC circuits, and therefore is not a fixed angle. Generally, the dynamically adjustable angle is positively correlated with an absolute value of the difference between the resonant currents corresponding to the two resonant circuits, in other words, if the absolute value of the difference between the resonant currents of the two resonant circuits is larger, the corresponding dynamically adjustable angle is larger.

In FIG. 8, the phase of the drive signal of S1A lags behind the phase of the drive signal of S1B. During actual control, the phase of the drive signal of S1A may be controlled, as required, to lead the phase of the drive signal of S1B.

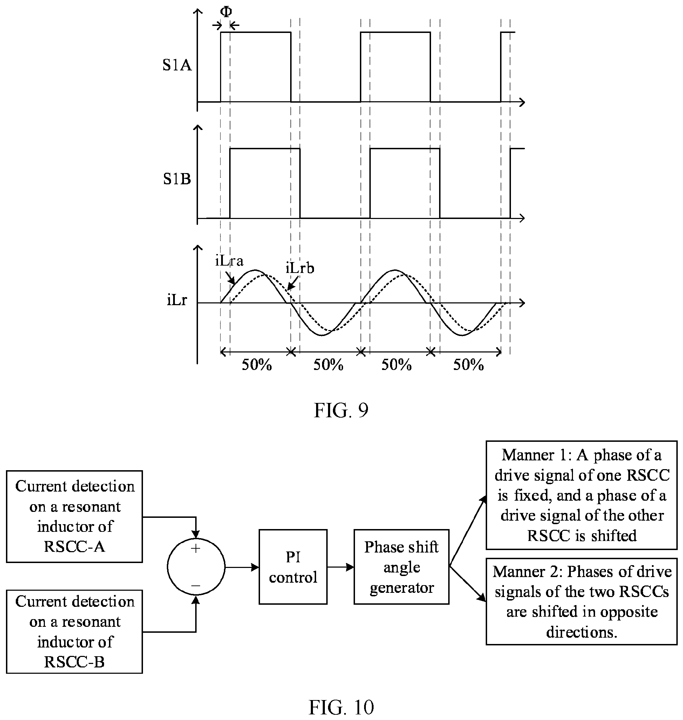

FIG. 9 is a sequence diagram in which a phase of a drive signal of S1A leads a phase of a drive signal of S1B.

The phase of the drive signal of S1B of RSCC-B lags behind the phase of the drive signal of S1A of RSCC-A.

In a same RSCC circuit, drive signals of switching transistors of a same bridge arm are complementary. FIG. 9 shows only a sequence of drive signals under phase shift control on different RSCC circuits.

To enable a phase difference between drive signals corresponding to RSCC-A and RSCC-B to be the dynamically adjustable angle, the following two implementations may be included:

For details, refer to FIG. 10, which is a model diagram of closed-loop control of a phase shift according to an embodiment of this application.

In Manner 1, one drive signal is fixed, and a phase of the other drive signal is controlled to be shifted.

The first current of a resonant inductor of RSCC-A is detected, the second current of a resonant inductor of RSCC-B is detected, and a closed-loop adjustment is performed on the first current and the second current to obtain the dynamically adjustable angle of the phase shift angle. For example, specifically, the current difference between the first current and the second current may be obtained, and a proportional integral PI adjustment may be performed on the current difference to obtain the dynamically adjustable angle of the phase shift angle. The dynamically adjustable angle is positively correlated with the difference. A specific value of the phase shift angle may be generated by a phase shift angle generator based on a result of the PI adjustment. The phase shift angle generator may generate the specific value of the phase shift angle by changing an initial value of a carrier or adjusting a value of a comparison value.

A specific implementation of detecting a current of a resonant inductor is not specifically limited in this embodiment of this application. For example, current detection may be performed by using a Hall effect sensor.

For example, the controller controls the phase of the drive signal corresponding to RSCC-A to remain unchanged, and controls the phase of the drive signal corresponding to RSCC-B to be shifted. In other words, the controller controls the phase of the first drive signal to be fixed, and controls the phase of the second drive signal to be shifted by the dynamically adjustable angle. Because RSCC-A and RSCC-B are connected in parallel, the controller may alternatively control the phase of the drive signal corresponding to RSCC-B to remain unchanged, and control the phase of the drive signal corresponding to RSCC-A to be shifted.

In Manner 2, the phases of the two drive signals are shifted in opposite directions.

Specifically, the controller controls the phase of the first drive signal of RSCC-A to be shifted by a first angle in a first direction, and controls the phase of the second drive signal of RSCC-B to be shifted by a second angle in a second direction. A sum of the first angle and the second angle is the dynamically adjustable angle, and the first direction is opposite to the second direction. In other words, because phase shift directions of the two drive signals are opposite, the phase difference between the two drive signals is larger as the phase shift continues. When the phase difference reaches the dynamically adjustable angle, the phase shift is stopped.

The following describes in detail an implementation of the first phase shift control with reference to the accompanying drawings.

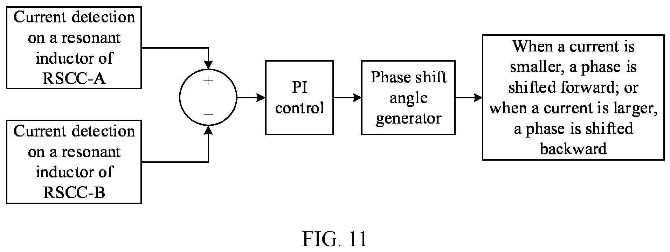

FIG. 11 is a model diagram of controlling a phase of only one drive signal to be shifted according to an embodiment of this application.

In this embodiment, an example in which the drive signal of RSCC-A is fixed and the phase of the drive signal of RSCC-B is controlled to be shifted is used. Certainly, the opposite is also true. That is, the drive signal of RSCC-B is fixed, and the phase of the drive signal of RSCC-A is shifted.

The same as FIG. 10, the dynamically adjustable angle Φ is obtained by performing closed-loop control on the two resonant currents.

If the current of the resonant inductor of RSCC-B is less than the current of the resonant inductor of RSCC-A, the phase of the drive signal of RSCC-B is shifted forward by Φ degrees, in other words, the phase of the drive signal of S1B is controlled to lead the phase of the drive signal of S1A by Φ degrees.

If the current of the resonant inductor of RSCC-B is greater than the current of the resonant inductor of RSCC-A, the phase of the drive signal of RSCC-B is shifted backward by Φ degrees, in other words, the phase of the drive signal of S1B is controlled to lag behind the phase of the drive signal of S1A by Φ degrees.

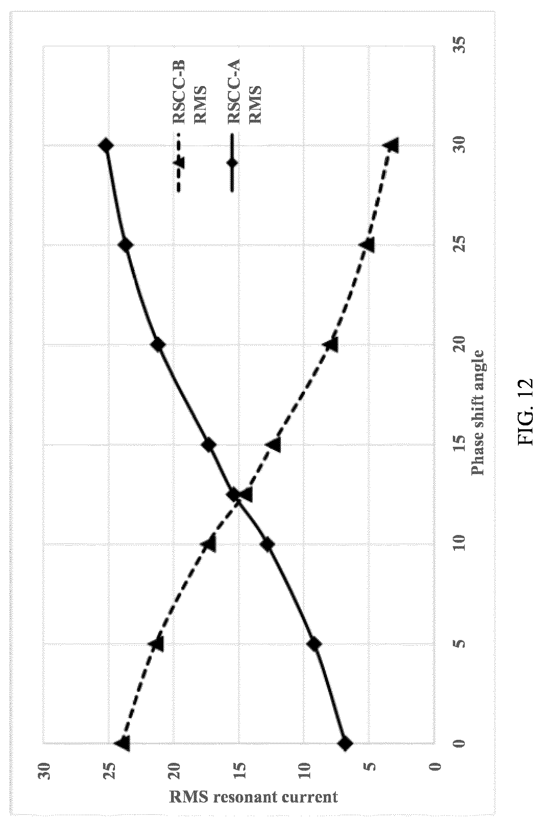

To intuitively understand a relationship between the resonant currents of the two RSCCs and the dynamically adjustable angle, refer to FIG. 12, which is a line graph of a relationship between resonant currents of two RSCCs and a dynamically adjustable angle according to an embodiment of this application.

In FIG. 12, a horizontal coordinate represents a phase shift angle of the drive signal of RSCC-B relative to the drive signal of RSCC-A, and is in a unit of degree, and a positive value indicates that the drive signal of RSCC-B lags behinds the drive signal of RSCC-A. A vertical coordinate represents an effective value of the current of the resonant inductor, and is in a unit of A.

It can be learned from FIG. 12 that a dashed line represents a trend of a change of the current of the resonant circuit of RSCC-B with the dynamically adjustable angle. It can be learned that the current of the resonant circuit of RSCC-B gradually decreases as the dynamically adjustable angle by which the phase of the drive signal of RSCC-B lags behind gradually increases.

A solid line represents a trend of a change of the current of the resonant circuit of RSCC-A with the dynamically adjustable angle. It can be learned that the current of the resonant circuit of RSCC-A gradually increases as the phase shift angle by which the phase of the drive signal of RSCC-B lags behind gradually increases. A total current of the resonant circuits of RSCC-A and RSCC-B basically remains unchanged, indicating that total processed power remains unchanged.

In conclusion, there is a monotonous change relationship between a current of a resonant circuit of each of RSCC-A and RSCC-B and the dynamically adjustable angle.

In FIG. 12, discrete parameters of the two RSCCs are different. For example, resonant parameters deviate by +10% to -10%, that is, a resonant inductance Lra and a switched capacitance Cra of RSCC-A are greater than a rated value by 10%, and a resonant inductance Lrb and a switched capacitance Crb of RSCC-B are less than the rated value by 10%. It may be understood that when resonant parameters of the two RSCCs do not deviate by the foregoing values, a curve of a relationship between a current of a resonant circuit and the phase shift angle is slightly different from that in FIG. 12, but a monotonous change relationship still remains.

When the drive signals of the two RSCCs are synchronous, effective values of the currents of the resonant inductors of RSCC-A and RSCC-B are respectively 6.8 A and 24 A, and an absolute value of a difference is 17.2 A. The current of the resonant inductor of RSCC-B is 3.5 times of the current of the resonant inductor of RSCC-A, and the difference is quite significant.

It can be learned from FIG. 12 that the phase of the drive signal corresponding to RSCC-A is fixed, and the phase of the drive signal corresponding to RSCC-B is gradually increased, so that the phase of the drive signal corresponding to RSCC-B lags behind the phase of the drive signal corresponding to RSCC-A by Φ (the phase of the drive signal corresponding to RSCC-A leads that of RSCC-B by Φ). The currents of the resonant inductors of the two RSCCs gradually become consistent. When the dynamically adjustable angle Φ reaches 12.5°, the resonant currents of the two circuits are basically consistent, in other words, the currents of the resonant inductors of the two circuits RSCC-A and RSCC-B are equal, and current equalization of the two RSCCs is implemented. In this embodiment, the currents of the two RSCCs are represented by detecting the currents of the resonant inductors, because the current of the resonant inductor is relatively easy to detect, for example, a detection circuit or a sensor that detects a current of a magnetic component can implement the detection.

The foregoing values are only used as examples. During specific implementation, the relationship between the corresponding resonant current and the dynamically adjustable angle may be obtained based on an actual application scenario, parameters of the resonant capacitor and the resonant inductor, and an application scenario of the RSCC circuit. It can be learned from the figure that at an intersection of two curves, the currents of the two RSCCs are equal, and a dynamically adjustable angle corresponding to the intersection is the phase difference between the drive signals of the two RSCCs.

In addition, it can be further learned from FIG. 12 that, after deviation from the intersection of the two current curves, a difference between the effective values of the currents of the resonant inductors of the two RSCCs increases in an opposite direction as the dynamically adjustable angle gradually increases. When the dynamically adjustable angle increases to 30°, the current difference between the two RSCCs basically reaches a limit value. If the dynamically adjustable angle further increases, the currents of the resonant inductors of the two RSCCs may change in an opposite direction, leading to non-monotonicity of control and a loss of a control capability. Therefore, in actual application, an amplitude of the dynamically adjustable angle may be limited, in other words, a maximum value of the dynamically adjustable angle needs to be limited. When the dynamically adjustable angle reaches a preset threshold angle, the dynamically adjustable angle remains at the preset threshold angle. That is, the controller is further configured to: when the dynamically adjustable angle is greater than the preset threshold angle, control the phase difference to be a sum of the preset fixed angle and the preset threshold angle. The preset threshold angle is a preset maximum upper limit value of the dynamically adjustable angle.

The preset threshold angle may be tested based on a specific application scenario to obtain an empirical value. For example, the preset threshold angle in this embodiment may be 30°, and a manner of obtaining the preset threshold angle is not specifically limited in this embodiment of this application. The foregoing value of the preset threshold angle exists in an example in which there are only two RSCCs and a drive signal of one of the RSCCs is fixed while a phase of a drive signal of the other RSCC is controlled to be shifted. If the phases of both the drive signals of the two RSCCs are shifted, the preset threshold angle may be 30°/2=15°.

In conclusion, in this embodiment of this application, the corresponding dynamically adjustable angle may be obtained based on the currents of the resonant inductors of the two RSCCs, to control the phase difference between the drive signals corresponding to the two RSCCs to be a sum of the preset fixed angle and the dynamically adjustable angle, so that current equalization of the two RSCCs is implemented, and a plurality of RSCC circuits are truly effectively connected in parallel on the premise of current equalization, thereby improving a power processing capability of the entire converter. In addition, in this solution, because a phase shift is controlled between two independent RSCCs and open-loop control is performed on a drive signal of a single RSCC, a soft switching characteristic of a switching transistor of a single RSCC is not affected, so that a switching damage is reduced, and power conversion efficiency is improved.

### Converter embodiment 2

The foregoing describes the implementation in which LC resonant circuits of two RSCC circuits are connected between midpoints of two bridge arms. The following describes another implementation.

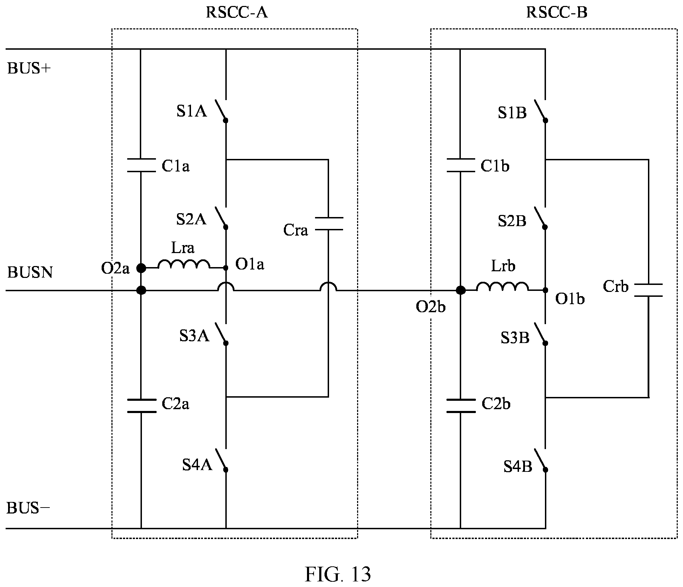

FIG. 13 is a schematic diagram of another resonant switched capacitor converter according to an embodiment of this application.

A first RSCC includes a first bridge arm, a second bridge arm, and a first LC resonant circuit. The second RSCC includes a third bridge arm, a fourth bridge arm, and a second LC resonant circuit.

Both a first terminal of the first bridge arm and a first terminal of the third bridge arm are connected to a first input terminal, namely, BUS+, of the resonant switched capacitor converter, a second terminal of the first bridge arm is connected to a first terminal of the second bridge arm, a second terminal of the third bridge arm is connected to a first terminal of the fourth bridge arm, and both a second terminal of the second bridge arm and a second terminal of the fourth bridge arm are connected to a second output terminal, namely, BUS-, of the resonant switched capacitor converter.

A resonant capacitor Cra of the first LC resonant circuit is connected between a midpoint of the first bridge arm and a midpoint of the second bridge arm, and a resonant capacitor Crb of the second LC resonant circuit is connected between a midpoint of the third bridge arm and a midpoint of the fourth bridge arm.

A resonant inductor Lra of the first LC resonant circuit is connected between the second terminal O1a of the first bridge arm and the second input terminal BUSN (namely, O2a) of the resonant switched capacitor converter, and a resonant inductor Lrb of the second LC resonant circuit is connected between the second terminal O1b of the third bridge arm and the second input terminal BUSN (namely, O2b) of the resonant switched capacitor converter.

Unlike in FIG. 7 in which the second terminal of the first bridge arm is connected to BUSN, in FIG. 13, the resonant inductor Lra is connected between the second terminal of the first bridge arm and BUSN.

It should be noted that the connection manner of the resonant inductor of the resonant circuit described in this embodiment is applicable to all other embodiments of this application.

Although the connection manner of the resonant inductor in the converter in FIG. 13 changes, charging and discharging paths of the LC resonant circuit are not affected, and are the same as the charging and discharging paths shown in FIG. 5 and FIG. 6. Details are not described herein again.

### Converter embodiment 3

A switching module of each bridge arm of two RSCC circuits provided in the foregoing embodiments is described by using a controllable switching transistor as an example. The following describes an implementation in which switching modules of lower bridge arms, namely, output bridge arms, are diodes.

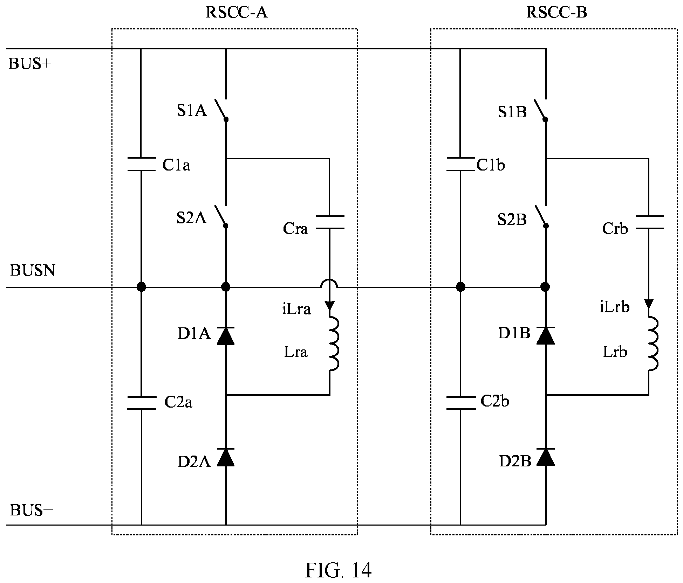

FIG. 14 is a schematic diagram in which a second bridge arm and a fourth bridge arm include diodes according to an embodiment of this application.

In FIG. 14, a first bridge arm between BUS+ and BUSN includes controllable switching transistors S1A and S2A, and similarly, a third bridge arm includes controllable switching transistors S1B and S2B.

The second bridge arm between BUSN and BUS- includes a first diode and a second diode, namely, diodes D1A and D2A, connected in series, and energy is transferred from BUS+ to BUS-. In this case, D1A and D2A form a freewheeling loop, that is, a positive electrode of D1A is connected to a negative electrode of D2A, a negative electrode of D1A is connected to a common point of the first bridge arm and the second bridge arm, and a positive electrode of D2A is connected to BUS-.

Similarly, the fourth bridge arm between BUSN and BUS- includes a third diode and a fourth diode, namely, D1B and D2B, connected in series, energy is transferred from BUS+ to BUS-, in other words, energy is transferred from C1a to C2a. In this case, D1B and D2B form a freewheeling loop, that is, a positive electrode of D1B is connected to a negative electrode of D2B, a negative electrode of D1B is connected to the common point of the first bridge arm and the second bridge arm, and a positive electrode of D2B is connected to BUS-.

It should be noted that, the implementation, described in this embodiment, in which switching modules of the second bridge arm and the fourth bridge arm are diodes is applicable to energy transfer from BUS+ to BUS-. If energy is transferred from BUS- to BUS+, in other words, energy is transferred from C2a to C1a, switching modules need to be reversed, that is, switching modules of the first bridge arm and switching modules of the third bridge arm may be diodes, and the switching modules of the second bridge arm and the switching modules of the fourth bridge arm need to be controllable switching transistors.

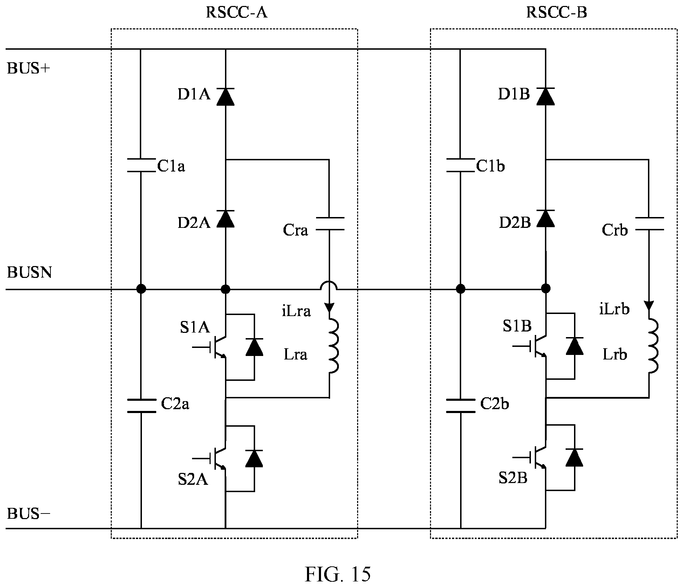

FIG. 15 is a schematic diagram in which a first bridge arm and a third bridge arm include diodes according to an embodiment of this application.

For ease of description, only RSCC-A is used as an example below. The same is true of RSCC-B.

During charging, S2A is conducted, S1A is cut off, energy between BUS- and BUSN is transferred to an LC resonant circuit, in other words, the LC resonant circuit is charged.

During discharging, S2A is cut off, S1A is conducted, energy of the LC resonant circuit is transferred to a part between BUS+ and BUSN, in other words, the LC resonant circuit is discharged.

In this case, two switching modules of a bridge arm corresponding to an energy output terminal are diodes, namely, D1A and D2A. To unify understanding with the foregoing embodiments, a bridge arm corresponding to an energy input terminal may be uniformly defined as the first bridge arm, and a bridge arm corresponding to the energy output terminal is uniformly defined as a second bridge arm, in other words, two switching modules of the first bridge arm need to be controllable switching transistors, the bridge arm corresponding to the energy output terminal is merely used to implement freewheeling, and a switching module of the bridge arm corresponding to the energy output terminal may be an uncontrollable diode. However, to implement bidirectional flowing of energy, switching modules of all bridge arms need to be disposed as controllable switching transistors.

As shown in the figure, a negative electrode of D1A is connected to BUS+, a positive electrode of D1A is connected to a negative electrode of D2A, and a positive electrode of D2A is connected to BUSN. Similarly, an output bridge arm corresponding to RSCC-B includes D1B and D2B. A negative electrode of D1B is connected to BUS+, a positive electrode of D1B is connected to a negative electrode of D2B, and a positive electrode of D2B is connected to BUSN.

A controllable switching transistor in all embodiments of this application may be an IGBT, or may be a MOS transistor, provided that the controllable switching transistor is a gate controllable switching transistor.

### Converter embodiment 4

The foregoing describes control of a dynamically adjustable angle when a preset fixed angle between a first drive signal of a first RSCC and a second drive signal of a second RSCC is 0, and the following describes a case in which the preset fixed angle between the first drive signal and the second drive signal is 360°/N. An example in which N is 2, in other words, two RSCCs are used, is still used for description. In this case, the preset fixed angle is 180°.

Because interleaving control of 180° is used for switching transistors of the two RSCCs, currents of filter capacitors (C1a, C2a, C1b, and C2b) can be effectively reduced. Therefore, a relatively small filter capacitor may be used to reduce a volume occupied by the filter capacitor.

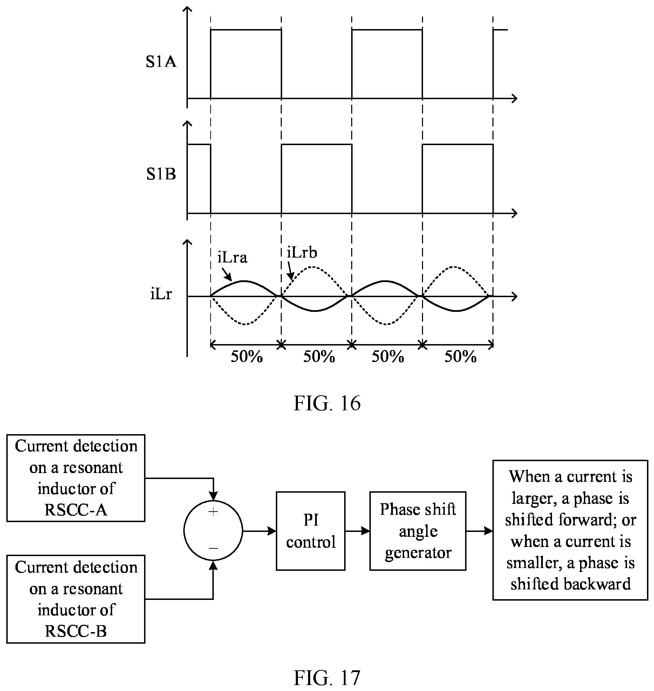

FIG. 16 is a sequence diagram in which two RSCC circuits use interleaved drive signals according to an embodiment of this application.

This embodiment is further described with reference to FIG. 7. When a dynamically adjustable angle Φ between drive signals of the two RSCCs is 0, switching transistors at a same position in RSCC-A and RSCC-B are driven by using complementary drive signals. As shown in FIG. 16, a first bridge arm includes a first switching transistor S1A and a second switching transistor S2A, and a third bridge arm includes a third switching transistor S1B and a fourth switching transistor S2B.

A drive signal of the first switching transistor S1A is complementary to a drive signal of the second switching transistor S2A, and a drive signal of the third switching transistor S1B is complementary to a drive signal of the fourth switching transistor S2B.

It can be learned from FIG. 16 that the drive signals corresponding to S1A and S1B are exactly phase-inverted, in other words, there is a phase shift of 180° between the drive signals. When S1A is conducted, S1B is cut off; or when S1A is cut off, S1B is conducted. In addition, current directions of two resonant circuits are also opposite, in other words, directions of iLra and iLrb are opposite. Comparing currents of two resonant inductors means comparing peak values, effective values, or average values of the currents of the two resonant inductors.

The foregoing is also described by using a duty cycle of 50% as an example. Even if each switching transistor is driven in an open-loop control mode, if a difference between resonant parameters of the circuits exists, for example, resonant inductances or resonant capacitances are different, the currents of the resonant inductors of the RSCC circuits are still significantly different. Specifically, an absolute value of a current difference between the two circuits may be relatively large, as shown in FIG. 16.

The following describes in detail a current equalization control policy corresponding to interleaving driving with reference to the accompanying drawings.

FIG. 17 is a model diagram of current equalization control corresponding to phase shift control according to this embodiment.

To resolve a current difference between the two RSCCs and implement current equalization, a control policy the same as that in FIG. 10 may be used. That is, in one manner, a drive signal of one of the RSCCs is fixed, and a phase of a drive signal of the other RSCC is controlled to be shifted. In the other manner, the phases of the drive signals of the two RSCCs are separately shifted in opposite directions.

A phase shift direction in FIG. 17 is exactly opposite to a phase shift direction in FIG. 11.

The following further describe a case in which a drive signal of RSCC-A is fixed and a phase of a drive signal of RSCC-B is shifted.

During interleaving control, a phase needs to be controlled to be shifted backward for an RSCC circuit with a smaller current, or a phase needs to be controlled to be shifted forward for an RSCC circuit with a larger current.

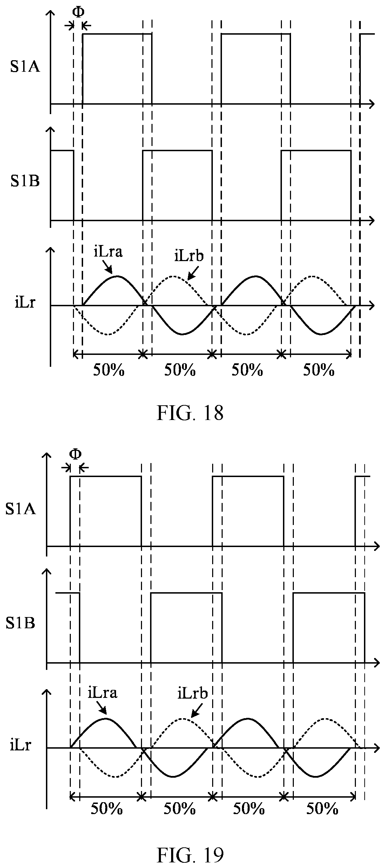

FIG. 18 is a sequence diagram in which a phase is shifted forward for RSCC-B.

If a current of a resonant inductor of RSCC-B is greater than a current of a resonant inductor of RSCC-A, a phase of the drive signal of RSCC-B is shifted forward by the dynamically adjustable angle Φ.

FIG. 19 is a sequence diagram in which a phase is shifted backward for RSCC-B.

During interleaving control, a controller controls a phase of the first drive signal to be fixed; and when the second current is less than the first current, controls a phase of the second drive signal to be shifted backward by the dynamically adjustable angle; or when the second current is greater than the first current, controls a phase of the second drive signal to be shifted forward by the dynamically adjustable angle.

For example, if the current of the resonant inductor of RSCC-B is less than the current of the resonant inductor of RSCC-A, a phase of the drive signal of RSCC-B is shifted backward by the dynamically adjustable angle Φ.

During interleaving control of 180°, because RSCC-A and RSCC-B are connected in parallel, fixing a phase of the drive signal of RSCC-A while shifting the phase of the drive signal of RSCC-B has a same effect as controlling the phase of the drive signal of RSCC-B while shifting the phase of the drive signal of RSCC-A. For example, when the phase of the drive signal of RSCC-B is fixed, if the current of the resonant inductor of RSCC-A is greater than the current of the resonant inductor of RSCC-B, the phase of the drive signal of RSCC-A is shifted forward by the dynamically adjustable angle Φ. If the current of the resonant inductor of RSCC-A is less than the current of the resonant inductor of RSCC-B, the phase of the drive signal of RSCC-A is shifted backward by the dynamically adjustable angle Φ.

It should be noted that, in FIG. 18 and FIG. 19, both "shifting forward" and "shifting backward" means shifting a phase by the dynamically adjustable angle Φ based on a shift of 180 degrees.

The preset fixed angle between the first drive signal and the second drive signal is 180°. Therefore, a phase difference between the first drive signal and the second drive signal is 180°+Φ.

The following describes a monotonous relationship between a resonant current and a dynamically adjustable angle during phase shift control with reference to the accompanying drawings.

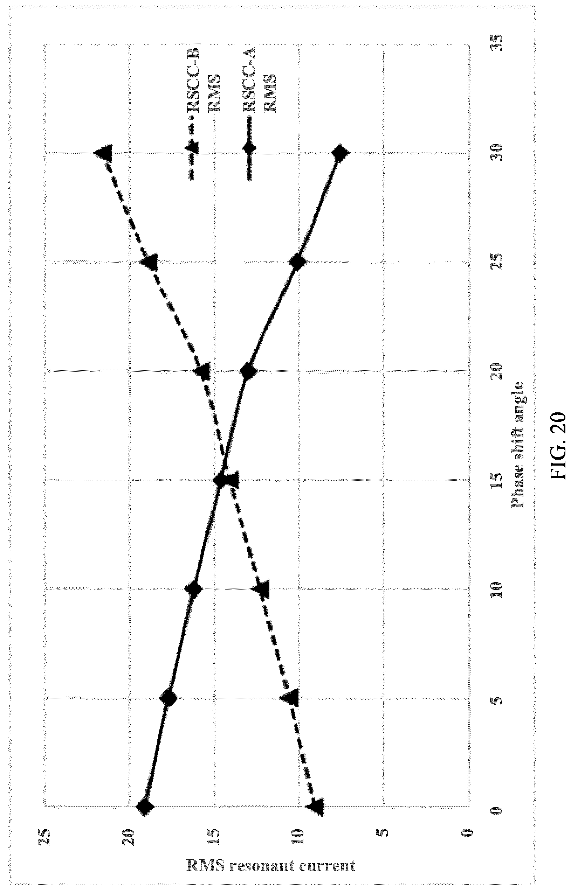

FIG. 20 is a line graph of a resonant current and a dynamically adjustable angle during interleaving control according to an embodiment of this application.

A horizontal coordinate represents the dynamically adjustable angle by which the phase of the drive signal of RSCC-B lags behind the phase of the drive signal of RSCC-A, and is in a unit of degree. A vertical coordinate is an effective value of the resonant current, and is in a unit of A.

In a case of same discrete parameters as in Embodiment 1, when interleaving control of 180° is performed on the drive signal of RSCC-A and the drive signal of RSCC-B, an effective value of a current of a resonant inductor of RSCC-A is 19.1 A, and an effective value of a current of a resonant inductor of RSCC-B is 9.1 A. A difference between the two currents is 10 A, and the difference is less than 17.2 A measured when non-interleaving control is performed. However, the difference between the two currents is still quite significant. Through comparison of FIG. 20 and FIG. 12, impact on currents of the two RSCCs that is caused by interleaving control and non-interleaving control is exactly opposite.

When the dynamically adjustable angle between the drive signal of RSCC-A and the drive signal of RSCC-B increases, and a phase is shifted backward for RSCC-B (or a phase is shifted forward for RSCC-A) by approximately 16°, effective values of the currents of the resonant inductors of RSCC-A and RSCC-B are basically the same, so that current equalization control is implemented.

In all the foregoing embodiments, shifting the phase of the drive signal forward and shifting the phase of the drive signal backward are relative concepts, and are essentially controlling the dynamically adjustable angle between the drive signals of the two RSCCs connected in parallel and performing a dynamic adjustment based on a current detection status of a resonant inductor to achieve a closed-loop automatic adjustment. When a phase of a drive signal of one RSCC is fixed and a phase of a drive signal of the other RSCC is shifted, the phase of the drive signal of RSCC-A may be alternatively shifted while the drive signal of RSCC-B is fixed.

It should be noted that current equalization during interleaving control is applicable to topologies of the foregoing other circuits, for example, an implementation in which an output bridge arm corresponds to a diode, as shown in FIG. 7. Similarly, the current equalization during interleaving control is also applicable to an implementation in which a position of a resonant inductor changes, as shown in FIG. 13.

### Converter embodiment 5

Energy is transferred from a positive bus BUS+ to a negative bus BUS- in the foregoing described embodiments. In addition, a DC/DC converter provided in this embodiment of this application may be a bidirectional converter, in other words, energy can flow reversely, that is, energy is transferred from the negative bus BUS- to the positive bus BUS+.

However, because the DC/DC converter is bidirectional, switching components of all corresponding bridge arms need to be controllable switching transistors, in other words, energy flowing in different directions can be implemented by controlling a switching status of the switching component.

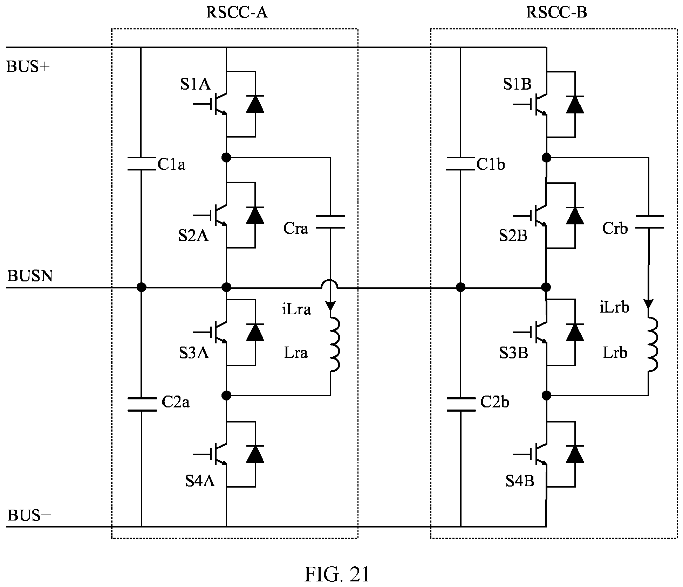

FIG. 21 is a schematic diagram of a bidirectional resonant switched capacitor converter according to an embodiment of this application.

In this embodiment, two RSCCs are still used as an example for description.

Because energy can flow bidirectionally, all switching components of all bridge arms are controllable switching transistors. As shown in the figure, a first bridge arm of RSCC-A includes controllable switching transistors S1A and S2A, a second bridge arm of RSCC-A includes controllable switching transistors S3A and S4A, and all the four controllable switching transistors include anti-parallel diodes.

Similarly, a third bridge arm of RSCC-B includes controllable switching transistors S1B and S2B, a fourth bridge arm of RSCC-B includes controllable switching transistors S3B and S4B, and all the four controllable switching transistors also include anti-parallel diodes.

In a topology shown in FIG. 21, energy can be transferred from C1a to C2a, and energy can also be transferred from C2a to C1a. Similarly, energy can be transferred from C1b to C2b, and energy can also be transferred from C2b to C1b. Because RSCC-A is connected in parallel to RSCC-B, directions in which energy of the two RSCCs is transferred are the same.

The foregoing embodiments are described by using a two-level resonant switched capacitor converter as an example. The following describes a multi-level resonant switched capacitor converter. The current equalization control manner described in the foregoing embodiments is also applicable to the multi-level resonant switched capacitor converter. The following still describes an example in which two RSCCs are connected in parallel.

### Converter embodiment 6

In the foregoing described embodiments, current equalization control is performed by using an example in which two RSCCs are connected in parallel. The following describes current equalization control when a plurality of RSCCs are connected in parallel.

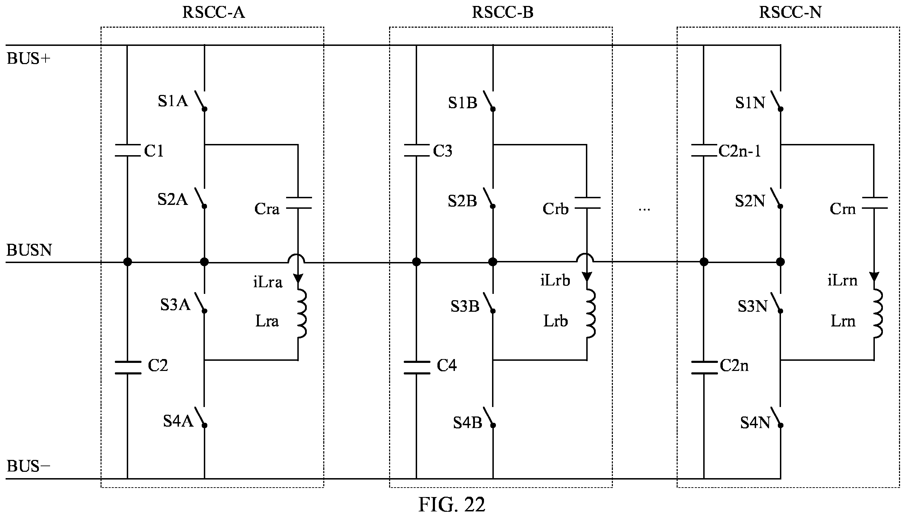

FIG. 22 is a schematic diagram of a resonant switched capacitor converter including a plurality of RSCCs according to an embodiment of this application.

The resonant switched capacitor converter provided in this embodiment includes N RSCCs connected in parallel: RSCC-A, RSCC-B, ..., and RSCC-N. N is an integer greater than or equal to 3.

Structures and connection relationships of RSCC-A and RSCC-B are completely the same as those shown in FIG. 5 and FIG. 6. Details are not described herein again. In addition, a structure and an internal connection relationship of RSCC-N are the same as those of RSCC-A.

The following mainly describes current equalization control when N RSCCs are connected in parallel.

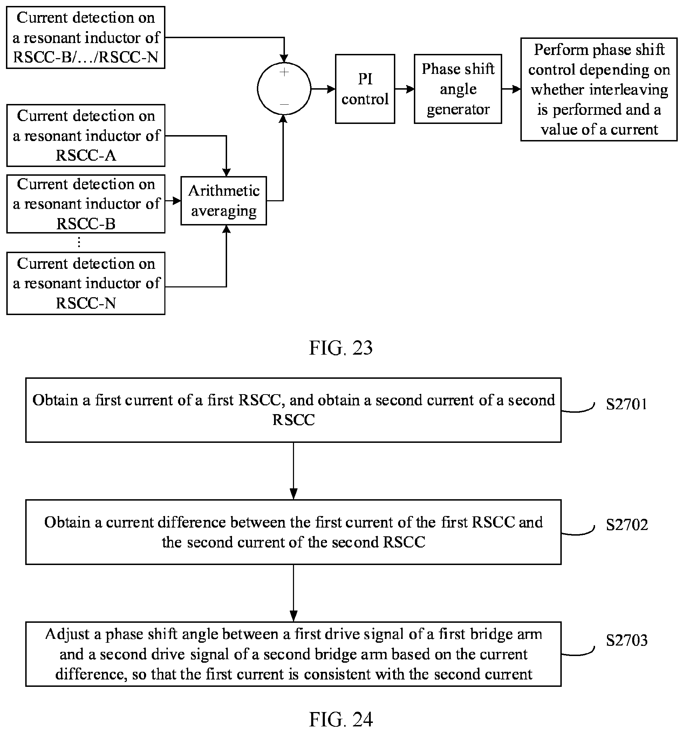

FIG. 23 is a model diagram of current equalization control corresponding to FIG. 22.

A current of a resonant circuit is still represented by a current of a resonant inductor.

When N RSCCs are connected in parallel, a current of a resonant inductor of each RSCC needs to be detected, and an average current value of the N RSCCs is obtained through arithmetic averaging, in other words, a controller obtains an average current value of resonant circuits of the N RSCC circuits, fixes a phase of a drive signal of one of the RSCC circuits, separately compares currents of resonant circuits of the other N-1 RSCCs with the average current value, obtains respective dynamically adjustable angles based on respective comparison results, and shifts phases of drive signals of the N-1 RSCCs based on the respective dynamically adjustable angles. In other words, closed-loop control is performed on the N-1 RSCCs based on differences between currents of resonant inductors of the N-1 RSCCs and the average current value to implement current equalization control on the N RSCCs.

During specific control, a manner of fixing a phase of a drive signal of one of the RSCCs while performing phase shift control on the drive signals of the other N-1 RSCCs may still be used. For example, a phase of a drive signal of RSCC-A is fixed, currents of resonant circuits of RSCC-B to RSCC-N are separately compared with the average current value, a difference corresponding to each RSCC is obtained, and corresponding closed-loop control is performed on the RSCC based on the difference corresponding to the RSCC, in other words, dynamically adjustable angles of drive signals of RSCC-B to RSCC-N are dynamically adjusted to implement current equalization control on the RSCCs.

It should be noted that current equalization control on a plurality of RSCCs connected in parallel also includes two types of control described in the foregoing embodiments, namely, non-interleaving control and interleaving control performed on drive signals of the RSCCs. Whether a phase is shifted forward or backward by a corresponding dynamically adjustable angle may be determined depending on whether non-interleaving control or interleaving control is performed. A specific implementation is similar to that in the foregoing embodiments, and details are not described herein again. It should be noted that when N RSCCs are connected in parallel, interleaving control is usually implemented through interleaving of a phase shift of 360°/N.

### Method embodiment 1

Based on a resonant switched capacitor converter, a photovoltaic device, and a photovoltaic power generation system that are provided in the foregoing embodiments, this embodiment of this application further provides a current equalization control method. The following describes in detail the method with reference to the accompanying drawings.

FIG. 24 is a flowchart of a current equalization control method for a resonant switched capacitor converter according to an embodiment of this application.

The current equalization control method provided in this embodiment is applied to the resonant switched capacitor converter provided in the foregoing embodiments. For details, refer to circuit diagrams shown in FIG. 5 to FIG. 7 and the like.

The method includes the following steps.

S2701: Obtain a first current of a first RSCC, and obtain a second current of a second RSCC.

The first current of the first RSCC may be obtained by obtaining a first current of a first LC resonant circuit, and the second current of the second RSCC may be obtained by obtaining a second current of a second LC resonant circuit.

A sequence of obtaining the first current and the second current is not limited in this step. Because the RSCC circuits are independent, respective currents may be obtained by corresponding current sampling circuits or current sensors without affecting each other.

It should be noted that, in this embodiment of this application, a current of a resonant circuit is represented by a current of a resonant inductor represents, a specific manner of obtaining the current of the resonant inductor is not limited, and any manner of obtaining a current of a magnetic component may be used to obtain the current.

S2702: Obtain a current difference between the first current of the first RSCC and the second current of the second RSCC.

A phase shift angle is obtained based on the current difference between the first current of the first LC resonant circuit and the second current of the second LC resonant circuit.

The phase shift angle includes a dynamically adjustable angle, and the dynamically adjustable angle is positively correlated with the current difference.

A controller is specifically configured to adjust the dynamically adjustable angle of the phase shift angle between a first drive signal and a second drive signal, so that the first current is consistent with the second current. Specifically, the phase shift angle may be obtained in the following manner:

The first current and the second current are obtained, and closed-loop adjustment control is performed on the first current and the second current to obtain the dynamically adjustable angle of the phase shift angle.

Specifically, the difference between the first current and the second current is obtained, and closed-loop control is performed on the difference to obtain the dynamically adjustable angle of the phase shift angle.

Generally, if an absolute value of the difference between the first current and the second current is larger, the dynamically adjustable angle is larger. In this embodiment, an effective value of the current of the resonant inductor may be obtained. In addition, whether the second current is subtracted from the first current or the first current is subtracted from the second current is not specifically limited in this embodiment of this application. Because the two RSCC circuits are connected in parallel, "first" and "second" are only names, and do not represent an actual sequence. An effect remains completely the same if the two are interchanged. Closed-loop control is performed on the difference between the resonant currents of the two RSCCs, so that the resonant currents of the two RSCCs are equal. The phase shift angle represents a relative phase displacement between the drive signals of the two RSCCs.

S2703: Adjust the phase shift angle between the first drive signal of the first RSCC and the second drive signal of the second RSCC based on the current difference between the first current of the first RSCC and the second current of the second RSCC, so that the first current is consistent with the second current.

If the absolute value of the current difference between the first current and the second current falls within a specific error range, the first current is considered to be consistent with the second current, in other words, the first current and the second current are considered equal.

That the first current and the second current are equal may be that effective currents are equal, average currents are equal, or peak currents are equal. This is not limited in this embodiment, and current sampling and closed-loop control may be performed as actually required.

In an ideal case, when discrete parameters of the first RSCC and discrete parameters of the second RSCC are completely consistent, the resonant currents of the two resonant circuits are equal, and the dynamically adjustable angle is not required, in other words, the dynamically adjustable angle is 0.

A preset fixed angle is unrelated to values of the resonant currents of the two resonant circuits, and is a preset fixed angle between the drive signals corresponding to the two RSCC circuits. The preset fixed angle may remain unchanged once being set. For example, the preset fixed angle may be 0. In an ideal case, when the dynamically adjustable angle is 0, the drive signals of the two RSCCs are synchronous.

In this embodiment of this application, the dynamically adjustable angle is concerned, in other words, the controller adjusts the dynamically adjustable angle of the phase shift angle between the first drive signal and the second drive signal, so that the first current is consistent with the second current.

The dynamically adjustable angle is controlled, so that currents of RSCCs are consistent with each other.

In addition, the preset fixed angle may be alternatively set to 360°/N. N is a quantity of RSCCs connected in parallel, and N is an integer greater than 1. For example, when N is 2, in other words, when two RSCCs are connected in parallel, the preset fixed angle is 180 degrees. When N is 3, in other words, when three RSCCs are connected in parallel, the preset fixed angle is 120 degrees. By analogy, examples are not described one by one herein.

During actual implementation, the controller controls a phase difference between the first drive signal and the second drive signal to be the phase shift angle, and specifically adjusts a phase of at least one of the first drive signal and the second drive signal to reach the phase difference.

Specifically, a phase of one of the drive signals may be fixed, and a phase of the other drive signal may be adjusted. Phases of the two drive signals may be alternatively adjusted, for example, the phases of the two drive signals are adjusted in opposite directions, to achieve the foregoing phase difference. The phase difference between the two drive signals is the preset fixed angle before current equalization. Therefore, during an actual adjustment, the dynamically adjustable angle may be adjusted to implement current equalization of the two RSCCs.

For ease of understanding, the following uses an example in which the preset fixed angle between the drive signals of the two RSCCs is 0 for description. To control the phase difference between the first drive signal of a first bridge arm and the second drive signal of a second bridge arm to be the phase shift angle, because the preset fixed angle is 0, the phase difference between the two drive signals is controlled to be the dynamically adjustable angle. The following two implementations may be included.

In Manner 1, one drive signal is fixed, and a phase of the other drive signal is controlled to be shifted.

A phase of the first drive signal is controlled to be fixed, and a phase of the second drive signal is controlled to be shifted by the dynamically adjustable angle.

For example, a phase of a drive signal corresponding to RSCC-A is controlled to remain unchanged, and a phase of a drive signal corresponding to RSCC-B is controlled to be shifted. In other words, the phase of the first drive signal is controlled to be fixed, and the phase of the second drive signal is controlled to be shifted by the dynamically adjustable angle. Because RSCC-A and RSCC-B are connected in parallel, alternatively, the phase of the drive signal corresponding to RSCC-B may be controlled to remain unchanged, and the phase of the drive signal corresponding to RSCC-A may be controlled to be shifted.

Specifically, the phase of the first drive signal of RSCC-A is controlled to be shifted by a first angle in a first direction, and the phase of the second drive signal of RSCC-B is controlled to be shifted by a second angle in a second direction. A sum of the first angle and the second angle is the dynamically adjustable angle, and the first direction is opposite to the second direction. In other words, because phase shift directions of the two drive signals are opposite, the phase difference between the two drive signals is larger as the phase shift continues. When the phase difference reaches the dynamically adjustable angle, the phase shift is stopped.

When non-interleaving control is performed on the first drive signal and the second drive signal, that is, corresponding drive signals of switching transistors at a same position in RSCC-A and RSCC-B have a same phase without performing a phase shift, the controlling the phase of the first drive signal to be fixed, and controlling the phase of the second drive signal to be shifted by the dynamically adjustable angle specifically includes:
controlling the phase of the first drive signal to be fixed; and when the second current is less than the first current, controlling the phase of the second drive signal to be shifted forward by the dynamically adjustable angle; or when the second current is greater than the first current, controlling the phase of the second drive signal to be shifted backward by the dynamically adjustable angle.

When interleaving control is performed on the first drive signal and the second drive signal, that is, there is a phase shift of 180° between corresponding drive signals of switching transistors at a same position in RSCC-A and RSCC-B in an example in which there are two RSCCs, in other words, N is 2, without performing a phase shift, the controlling the phase of the first drive signal to be fixed, and controlling the phase of the second drive signal to be shifted by the dynamically adjustable angle specifically includes:
controlling the phase of the first drive signal to be fixed; and when the second current is less than the first current, controlling the phase of the second drive signal to be shifted backward by the dynamically adjustable angle; or when the second current is greater than the first current, controlling the phase of the second drive signal to be shifted forward by the dynamically adjustable angle.

For more specific details of the foregoing control, refer to the detailed descriptions in the converter embodiments. Details are not described herein again.

In Manner 2, phases of the two drive signals are shifted in opposite directions.

A phase of the first drive signal is controlled to be shifted by a first angle in a first direction, and a phase of the second drive signal is controlled to be shifted by a second angle in a second direction. A sum of the first angle and the second angle is the dynamically adjustable angle, and the first direction is opposite to the second direction.

In addition, when the dynamically adjustable angle is greater than a preset threshold angle, the phase difference between the first drive signal of the first bridge arm and the second drive signal of the second bridge arm is a sum of the preset fixed angle and the preset threshold angle.

It can be learned from a line graph of resonant currents and a phase shift angle that, after deviation from an intersection of two current curves, a difference between effective values of the currents of resonant inductors of the two RSCCs increases in an opposite direction as the dynamically adjustable angle gradually increases. When the dynamically adjustable angle further increases to 30°, the current difference between the two RSCCs basically reaches a limit value. If the dynamically adjustable angle further increases, the currents of the resonant inductors of the two RSCCs may change in an opposite direction, leading to non-monotonicity of control and a loss of a control capability. Therefore, in actual application, an amplitude of the dynamically adjustable angle may be limited, in other words, a maximum value of the dynamically adjustable angle needs to be limited. When the dynamically adjustable angle reaches an upper limit value, the dynamically adjustable angle remains at the upper limit value, and the upper limit value is set as the preset threshold angle. In this case, when the dynamically adjustable angle is greater than the preset threshold angle, the controller controls the phase difference to be a sum of the preset fixed angle and the preset threshold angle.

The preset angle may be tested based on a specific application scenario to obtain an empirical value.

In conclusion, in this application, the corresponding dynamically adjustable angle may be obtained based on a difference between the currents of the resonant inductors of the two RSCCs, to control the phase difference between the drive signals corresponding to the two RSCCs to be the phase shift angle, so that current equalization of the two RSCCs is implemented, and the two RSCC circuits are effectively connected in parallel, thereby improving a power processing capability of the entire converter.

The forgoing current equalization control method is described by using two RSCCs as an example. The following describes a scenario in which N RSCCs are connected in parallel, and N is greater than or equal to 3.

When N RSCC circuits connected in parallel are included, and N is an integer greater than or equal to 3, current equalization control specifically includes:
obtaining an average current value of resonant circuits of the N RSCC circuits, where similarly, currents of resonant inductors of LC resonant circuits of the N RSCCs may be obtained; and
fixing a phase of a drive signal of one of the RSCC circuits, separately comparing currents of resonant circuits of the other N-1 RSCCs with the average current value, obtaining respective dynamically adjustable angles based on respective comparison results, and shifting phases of drive signals of the N-1 RSCCs based on the respective dynamically adjustable angles.

During specific control, a manner of fixing a phase of a drive signal of one of the RSCCs while performing phase shift control on the drive signals of the other N-1 RSCCs may still be used. For example, a phase of a drive signal of RSCC-A is fixed, currents of resonant circuits of RSCC-B to RSCC-N are separately compared with the average current value, a difference corresponding to each RSCC is obtained, and corresponding closed-loop control is performed on the RSCC based on the difference corresponding to the RSCC, in other words, dynamically adjustable angles of drive signals of RSCC-B to RSCC-N are dynamically adjusted to implement current equalization control on the RSCCs.

In the method provided in this embodiment of this application, the corresponding dynamically adjustable angle may be obtained based on the currents of the resonant inductors of the two RSCCs, to control the phase difference between the drive signals corresponding to the two RSCCs to be a sum of the preset fixed angle and the dynamically adjustable angle, so that current equalization of the two RSCCs is implemented, and a plurality of RSCC circuits are truly effectively connected in parallel on the premise of current equalization, thereby improving a power processing capability of the entire converter. In addition, in this solution, because a phase shift is controlled between two independent RSCCs and open-loop control is performed on a drive signal of a single RSCC, a soft switching characteristic of a switching transistor of a single RSCC is not affected, so that a switching damage is reduced, and power conversion efficiency is improved.

The method provided in the foregoing embodiment is not only applicable to the specific topology of the resonant switched capacitor converter provided in the foregoing embodiment, but also applicable to a topology of a resonant switched capacitor converter of another topology, for example, a plurality of RSCC circuits that are connected in parallel and that have another topology and connection relationship. The foregoing embodiment is merely described by using an example in which one RSCC includes two bridge arms and each bridge arm includes one switching component. The current equalization method provided above is applicable to a resonant switched capacitor converter with another voltage conversion proportion, provided that the resonant switched capacitor converter includes a plurality of RSCCs connected in parallel.

For another specific working principle of the method embodiment, refer to the foregoing descriptions in the converter embodiments. Details are not described herein again. For a specific topology structure of the converter to which this embodiment of the method is applicable, refer to various schematic diagrams corresponding to the foregoing converter embodiments.

It should be understood that, in this application, "at least one" means one or more, and "a plurality of" means two or more. The term "and/or" is used to describe an association relationship for describing associated objects, and indicates that three relationships may exist. For example, "A and/or B" may represent the following three cases: Only A exists, only B exists, and both A and B exist, where A and B may be singular or plural. The character "/" usually represents an "or" relationship between the associated objects. "At least one of the following items (pieces)" or a similar expression thereof means any combination of these items, including any combination of a single item (piece) or a plurality of items (pieces). For example, at least one of a, b, and c may represent a, b, c, "a and b", "a and c", "b and c", or "a, b, and c", where a, b, and c may be singular or plural.

## Claims

1. A photovoltaic system, comprising a first DC/DC converter (200), a second DC/DC converter (100), a resonant switched capacitor converter (300), an inverter (2000), a photovoltaic array, and a controller, wherein
an input terminal of the first DC/DC converter (200) and an input terminal of the second DC/DC converter (100) are connected to the photovoltaic array;
wherein the inverter (2000) comprises a positive input terminal of the inverter, a negative input terminal of the inverter (2000) and a neutral wire of the inverter (2000);
wherein the positive input terminal of the inverter (2000) is directly connected to the output terminal of the second DC/DC converter (100);
a first input terminal of the resonant switched capacitor converter (300) is connected to a positive output terminal of the first DC/DC converter (200), and a second input terminal of the resonant switched capacitor converter (300) is connected to a negative output terminal of the first DC/DC converter (200);
a first output terminal of the resonant switched capacitor converter (300) is connected to a neutral wire of the inverter (2000), a second output terminal of the resonant switched capacitor converter (300) is connected to a negative bus of the inverter (2000), and the resonant switched capacitor converter (300) comprises at least the following two resonant switched capacitor circuits, RSCCs connected in parallel: a first RSCC (RSCC-A) and a second RSCC (RSCC-B);
wherein the first RSCC (RSCC-A) comprises a first bridge arm, a second bridge arm and a first LC resonant circuit;
wherein the first bridge arm includes two switching transistors (S1A, S2A) connected in series, and the second bridge arm includes two switching transistors (S3A, S4A) connected in series;
wherein two switching transistors (S1A, S2A) included in the first bridge arm are connected between a positive bus (BUS+) and a neutral wire (BUSN), and the two switching transistors (S3A, S4A) included in the second bridge arm are connected between the neutral wire (BUSN) and a negative bus (BUS-);
wherein the first LC resonant circuit includes a resonant capacitor (Cra) and a resonant inductor (Lra) connected in series, and the resonant capacitor (Cra) is connected to a midpoint of the first bridge arm and the resonant inductor (Lra) is connected to a midpoint of the second bridge arm;
wherein the midpoint of the first bridge arm refers to a common terminal of switching transistors (S1A, S2A), and the midpoint of the second bridge arm refers to a common terminal of switching transistors (S3A, S4A);
wherein the positive bus (BUS+) and the neutral wire (BUSN) represent the first input terminal and the second input terminal of the resonant switched capacitor converter (300), and the neutral wire (BUSN) and the negative bus (BUS-) represent the first output terminal and the second output terminal of the resonant switched capacitor converter (300);
wherein the neutral wire of the inverter (2000) is same as a neutral wire of the resonant switched capacitor converter (300), and the neutral wire of the inverter (2000) and the neutral wire of the resonant switched capacitor converter (300) are connected together and have equal reference potentials;
wherein the positive bus (BUS+) connected to the first input terminal of the resonant switched capacitor converter (300) is different from a bus connected to the positive input terminal of the inverter (2000);
wherein the second RSCC (RSCC-B) includes a third bridge arm, a fourth bridge arm, and a second LC resonant circuit;
wherein the third bridge arm includes two switching transistors (S1B, S2B) connected in series, and the fourth bridge arm includes two switching transistors (S3B, S4B) connected in series;
wherein the two switching transistors (S1B, S2B) included in the third bridge arm are connected between the positive bus (BUS+) and the neutral wire (BUSN), and the two switching transistors (S3B, S4B) included in the fourth bridge arm are connected between the neutral wire (BUSN) and the negative bus (BUS-);
wherein the second LC resonant circuit includes a resonant capacitor (Crb) and a resonant inductor (Lrb) connected in series, and the resonant capacitor (Crb) is connected to a midpoint of the third bridge arm and the resonant inductor (Lra) is connected to a midpoint of the fourth bridge arm;
wherein the midpoint of the third bridge arm refers to a common terminal of the two switching transistors (S1B, S2B) included in the third bridge arm, and the midpoint of the fourth bridge arm refers to a common terminal of the two switching transistors (S3B, S4B) of the fourth bridge arm;
wherein a first capacitor (C1a) is connected in parallel to two terminals of the first bridge arm, the first capacitor being an input filter of the first RSCC (RSCC-A);
wherein a second capacitor (C2a) is connected to two terminals of the second bridge arm, the second capacitor being an output filter capacitor of the first RSCC (RSCC-A)
wherein a third capacitor (C1b) is connected in parallel to two terminals of the third bridge arm, the third capacitor (C1b) being an input filter capacitor of the second RSCC (RSCC-B)
wherein a fourth capacitor (C2b) is connected in parallel to two terminals of the fourth bridge arm, the fourth capacitor being an output filter capacitor of the second RSCC (RSCC-B);
wherein the first capacitor (C1a) and the second capacitor (C2a) are connected in series;
wherein the third capacitor (C1b) and the fourth capacitor (C2b) are connected in series;
wherein the two switching transistors (S1A, S2A) of the first bridge arm are connected in series with the two switching transistors (S3A, S4A) of the second bridge arm
wherein the two switching transistors (S1B, S2B) of the third bridge arm are connected in series with the two switching transistors (S3B, S4B) of the fourth bridge arm;
wherein a first input terminal of the resonant switched capacitor converter is connected to the first capacitor (C1a) and a first switching transistor (S1A) of the two switching transistors of the first bridge arm, and a second input terminal of the resonant capacitor converter and a first output terminal of the resonant capacitor converter are connected to a midpoint between the first capacitor (C1a) and the second capacitor (C1b) and a midpoint between a second switching transistor of the two switching transistors of the first bridge arm and a third switching transistor (S3A) of the two switching transistors of the second bridge arm; and a second output terminal of the resonant capacitor converter is connected to the second capacitor (C2a) and a fourth switching transistor of the two switching transistors of the second bridge arm; and
the controller is configured to adjust a phase shift angle between a first drive signal of the first RSCC and a second drive signal of the second RSCC (RSCC-B) based on a current difference between a first current of the first RSCC (RSCC-A) and a second current of the second RSCC (RSCC-B), so that the first current is consistent with the second current.

2. The system according to claim 1, wherein the phase shift angle is positively correlated with the current difference.

3. The system according to claim 1, wherein the controller is specifically configured to adjust a phase of at least one of the first drive signal and the second drive signal to adjust the phase shift angle between the first drive signal and the second drive signal.

4. The system according to claim 2 or 3, wherein the phase shift angle is a sum of a preset fixed angle and a dynamically adjustable angle, and the preset fixed angle is 0; and
the controller is specifically configured to adjust the dynamically adjustable angle based on the current difference to adjust the phase shift angle.

5. The system according to claim 4, wherein the controller is specifically configured to: when the second current is less than the first current, control a phase of the second drive signal to lead a phase of the first drive signal by the dynamically adjustable angle; or when the second current is greater than the first current, control a phase of the second drive signal to lag behind a phase of the first drive signal by the dynamically adjustable angle.

6. The system according to claim 2 or 3, wherein the phase shift angle is a sum of a preset fixed angle and a dynamically adjustable angle, and the preset fixed angle is 360°/N, wherein N is a quantity of RSCCs connected in parallel, wherein N is equal to 2; and
the controller is specifically configured to adjust the dynamically adjustable angle based on the current difference and the preset fixed angle to adjust the phase shift angle.

7. The system according to claim 6, wherein the controller is specifically configured to: when the second current is less than the first current, control a phase of the second drive signal to lag behind a phase of the first drive signal by the dynamically adjustable angle; or when the second current is greater than the first current, control a phase of the second drive signal to lead a phase of the first drive signal by the dynamically adjustable angle.

8. The system according to claim 5 or 7, wherein the controller is further configured to: when the dynamically adjustable angle is greater than a preset threshold angle, control the dynamically adjustable angle to be the preset threshold angle.

9. The system according to claim 8, wherein when the controller adjusts a phase of one of the first drive signal and the second drive signal to adjust the dynamically adjustable angle, the preset threshold angle is less than or equal to 30°.

10. The system according to claim 8, wherein when the controller adjusts the phase of the first drive signal and the phase of the second drive signal to adjust the dynamically adjustable angle, the preset threshold angle is less than or equal to 15°.

11. A current equalization control method, applied to a photovoltaic system, wherein the photovoltaic system comprises a first DC/DC converter (200), a second DC/DC converter (100), a resonant switched capacitor converter (300), a photovoltaic array, an inverter (2000) and a controller; the inverter (2000) comprising a positive input terminal of the inverter, a negative input terminal of the inverter and a neutral wire of the inverter; the positive input terminal of the inverter (2000) is directly connected to the output terminal of the second DC/DC converter (100); an input terminal of the first DC/DC converter (200) and the second DC/DC converter (200) are connected to the photovoltaic array, a first input terminal of the resonant switched capacitor converter (300) is connected to a positive output terminal of the first DC/DC converter (200), and a second input terminal of the resonant switched capacitor converter (300) is connected to a negative output terminal of the first DC/DC converter (200); and a first output terminal of the resonant switched capacitor converter (300) is connected to a neutral wire of the inverter (2000), a second output terminal of the resonant switched capacitor converter (300) is connected to a negative bus of the inverter (2000), the neutral wire of the inverter (2000) is same as a neutral wire of the resonant switched capacitor converter (300), and the neutral wire of the inverter (2000) and the neutral wire of the resonant switched capacitor converter (300) are connected together and have equal reference potentials; the positive bus (BUS+) connected to the first input terminal of the resonant switched capacitor converter (300) is different from a bus connected to the positive input terminal of the inverter (2000); and the resonant switched capacitor converter (300) comprises at least the following two resonant switched capacitor circuits RSCCs connected in parallel: a first RSCC and a second RSCC; wherein the first RSCC (RSCC-A) comprises a first bridge arm, a second bridge arm and a first LC resonant circuit;
wherein the first bridge arm includes two switching transistors (S1A, S2A) connected in series, and the second bridge arm includes two switching transistors (S3A, S4A) connected in series;
wherein two switching transistors (S1A, S2A) included in the first bridge arm are connected between a positive bus (BUS+) and a neutral wire (BUSN), and the two switching transistors (S3A, S4A) included in the second bridge arm are connected between the neutral wire (BUSN) and a negative bus (BUS-);
wherein the first LC resonant circuit includes a resonant capacitor (Cra) and a resonant inductor (Lra) connected in series, and the resonant capacitor (Cra) is connected to a midpoint of the first bridge arm and the resonant inductor (Lra) is connected to a midpoint of the second bridge arm;
wherein the midpoint of the first bridge arm refers to a common terminal of switching transistors (S1A, S2A), and the midpoint of the second bridge arm refers to a common terminal of switching transistors (S3A, S4A);
wherein the positive bus (BUS+) and the neutral wire (BUSN) represent the first input terminal and the second input terminal of the resonant switched capacitor converter (300), and the neutral wire (BUSN) and the negative bus (BUS-) represent the first output terminal and the second output terminal of the resonant switched capacitor converter (300);
wherein the second RSCC (RSCC-B) includes a third bridge arm, a fourth bridge arm, and a second LC resonant circuit;
wherein the third bridge arm includes two switching transistors (S1B, S2B) connected in series, and the fourth bridge arm includes two switching transistors (S3B, S4B) connected in series;
wherein the two switching transistors (S1B, S2B) included in the third bridge arm are connected between the positive bus (BUS+) and the neutral wire (BUSN), and the two switching transistors (S3B, S4B) included in the fourth bridge arm are connected between the neutral wire (BUSN) and the negative bus (BUS-);
wherein the second LC resonant circuit includes a resonant capacitor (Crb) and a resonant inductor (Lrb) connected in series, and the resonant capacitor (Crb) is connected to a midpoint of the third bridge arm and the resonant inductor (Lra) is connected to a midpoint of the fourth bridge arm;
wherein the midpoint of the third bridge arm refers to a common terminal of the two switching transistors (S1B, S2B) included in the third bridge arm, and the midpoint of the fourth bridge arm refers to a common terminal of the two switching transistors (S3B, S4B) of the fourth bridge arm;
wherein a first capacitor (C1a) is connected in parallel to two terminals of the first bridge arm, the first capacitor being an input filter of the first RSCC;
wherein a second capacitor (C2a) is connected to two terminals of the second bridge arm, the second capacitor being an output filter capacitor of the first RSCC (RSCC-A)
wherein a third capacitor (C1b) is connected in parallel to two terminals of the third bridge arm, the third capacitor (C1b) being an input filter capacitor of the second RSCC (RSCC-B)
wherein a fourth capacitor (C2b) is connected in parallel to two terminals of the fourth bridge arm, the fourth capacitor being an output filter capacitor of the second RSCC (RSCC-B);
wherein the first capacitor (C1a) and the second capacitor (C2a) are connected in series;
wherein the third capacitor (C1b) and the fourth capacitor (C2b) are connected in series;
wherein the two switching transistors (S1A, S2A) of the first bridge arm are connected in series with the two switching transistors (S3A, S4A) of the second bridge arm
wherein the two switching transistors (S1B, S2B) of the third bridge arm are connected in series with the two switching transistors (S3B, S4B) of the fourth bridge arm;
wherein a first input terminal of the resonant switched capacitor converter is connected to the first capacitor (C1a) and a first switching transistor (S1A) of the two switching transistors of the first bridge arm, and a second input terminal of the resonant capacitor converter and a first output terminal of the resonant capacitor converter are connected to a midpoint between the first capacitor (C1a) and the second capacitor (C1b) and a midpoint between a second switching transistor of the two switching transistors of the first bridge arm and a third switching transistor (S3A) of the two switching transistors of the second bridge arm; and a second output terminal of the resonant capacitor converter is connected to the second capacitor (C2a) and a fourth switching transistor of the two switching transistors of the second bridge arm; and
the method comprises:
obtaining (S2701) a first current of the first RSCC (RSCC-A), and obtaining a second current of the second RSCC; and
adjusting (S2703) a phase shift angle between a first drive signal of the first RSCC (RSCC-A) and a second drive signal of the second RSCC (RSCC-B) based on a current difference between the first current of the first RSCC (RSCC-A) and the second current of the second RSCC (RSCC-B), so that the first current is consistent with the second current.

12. The method according to claim 11, wherein the phase shift angle is positively correlated with the current difference.

## Patentansprüche

1. Fotovoltaisches System, umfassend einen ersten DC/DC-Wandler (200), einen zweiten DC/DC-Wandler (100), einen resonanten Schaltkondensatorwandler (300), einen Wechselrichter (2000), eine Fotovoltaikanordnung und eine Steuervorrichtung, wobei ein Eingangsanschluss des ersten DC/DC-Wandlers (200) und ein Eingangsanschluss des zweiten DC/DC-Wandlers (100) mit der Fotovoltaikanordnung verbunden sind; wobei der Wechselrichter (2000) einen Plus-Eingangsanschluss des Wechselrichters, einen Minus-Eingangsanschluss des Wechselrichters (2000) und eine Neutralleitung des Wechselrichters (2000) umfasst;
wobei der Plus-Eingangsanschluss des Wechselrichters (2000) direkt mit dem Ausgangsanschluss des zweiten DC/DC-Wandlers (100) verbunden ist;
ein erster Eingangsanschluss des resonanten Schaltkondensatorwandlers (300) mit einem Plus-Ausgangsanschluss des ersten DC/DC-Wandlers (200) verbunden ist und ein zweiter Eingangsanschluss des resonanten Schaltkondensatorwandlers (300) mit einem Minus-Ausgangsanschluss des ersten DC/DC-Wandlers (200) verbunden ist; ein erster Ausgangsanschluss des resonanten Schaltkondensatorwandlers (300) mit einer Neutralleitung des Wechselrichters (2000) verbunden ist, ein zweiter Ausgangsanschluss des resonanten Schaltkondensatorwandlers (300) mit einem Minus-Bus des Wechselrichters (2000) verbunden ist und der resonante Schaltkondensatorwandler (300) mindestens die folgenden zwei parallel verbundenen resonanten Schaltkondensatorschaltungen, RSCC, umfasst: eine erste RSCC (RSCC-A) und eine zweite RSCC (RSCC-B);
wobei die erste RSCC (RSCC-A) einen ersten Brückenarm, einen zweiten Brückenarm und einen ersten LC-Resonanzkreis umfasst;
wobei der erste Brückenarm zwei in Reihe geschaltete Schalttransistoren (S1A, S2A) enthält, und der zweite Brückenarm zwei in Reihe geschaltete Schalttransistoren (S3A, S4A) enthält;
wobei die zwei im ersten Brückenarm enthaltenen Schalttransistoren (S1A, S2A) zwischen einem Plus-Bus (BUS+) und einer Neutralleitung (BUSN) verbunden sind und die zwei im zweiten Brückenarm enthaltenen Schalttransistoren (S3A, S4A) zwischen der Neutralleitung (BUSN) und einem Minus-Bus (BUS-) verbunden sind; wobei der erste LC-Resonanzkreis einen Resonanzkondensator (Cra) und eine Resonanzinduktivität (Lra), die in Reihe verbunden sind, enthält, und der Resonanzkondensator (Cra) mit einem Mittelpunkt des ersten Brückenarms verbunden ist, und die Resonanzinduktivität (Lra) mit einem Mittelpunkt des zweiten Brückenarms verbunden ist;
wobei sich der Mittelpunkt des ersten Brückenarms auf einen gemeinsamen Anschluss der Schalttransistoren (S1A, S2A) bezieht und sich der Mittelpunkt des zweiten Brückenarms auf einen gemeinsamen Anschluss der Schalttransistoren (S3A, S4A) bezieht;
wobei der Plus-Bus (BUS+) und die Neutralleitung (BUSN) den ersten Eingangsanschluss und den zweiten Eingangsanschluss des resonanten Schaltkondensatorwandlers (300) darstellen, und die Neutralleitung (BUSN) sowie der Minus-Bus (BUS-) den ersten Ausgangsanschluss und den zweiten Ausgangsanschluss des resonanten Schaltkondensatorwandlers (300) darstellen;
wobei die Neutralleitung des Wechselrichters (2000) dieselbe wie die Neutralleitung des resonanten Schaltkondensatorwandlers (300) ist und die Neutralleitung des Wechselrichters (2000) und die Neutralleitung des resonanten Schaltkondensatorwandlers (300) miteinander verbunden sind und gleiche Referenzpotenziale aufweisen;
wobei sich der Plus-Bus (BUS+), der mit dem ersten Eingangsanschluss des resonanten Schaltkondensatorwandlers (300) verbunden ist, von einem Bus unterscheidet, der mit dem Plus-Eingangsanschluss des Wechselrichters (2000) verbunden ist;
wobei die zweite RSCC (RSCC-B) einen dritten Brückenarm, einen vierten Brückenarm und einen zweiten LC-Resonanzkreis enthält;
wobei der dritte Brückenarm zwei in Reihe verbundene Schalttransistoren (S1B, S2B) enthält und der vierte Brückenarm zwei in Reihe geschaltete Schalttransistoren (S3B, S4B) enthält;
wobei die zwei im dritten Brückenarm enthaltenen Schalttransistoren (S1B, S2B) zwischen dem Plus-Bus (BUS+) und der Neutralleitung (BUSN) verbunden sind und die zwei im vierten Brückenarm enthaltenen Schalttransistoren (S3B, S4B) zwischen der Neutralleitung (BUSN) und dem Minus-Bus (BUS-) verbunden sind;
wobei der zweite LC-Resonanzkreis einen Resonanzkondensator (Crb) und eine Resonanzinduktivität (Lrb), die in Reihe verbunden sind, enthält, und der Resonanzkondensator (Crb) mit einem Mittelpunkt des dritten Brückenarms verbunden ist, und die Resonanzinduktivität (Lrb) mit einem Mittelpunkt des vierten Brückenarms verbunden ist;
wobei sich der Mittelpunkt des dritten Brückenarms auf einen gemeinsamen Anschluss der zwei im dritten Brückenarm enthaltenen Schalttransistoren (S1B, S2B) bezieht und sich der Mittelpunkt des vierten Brückenarms auf einen gemeinsamen Anschluss der zwei Schalttransistoren (S3B, S4B) des vierten Brückenarms bezieht;
wobei ein erster Kondensator (C1a) parallel mit zwei Anschlüssen des ersten Brückenarms verbunden ist, wobei der erste Kondensator ein Eingangsfilter der ersten RSCC (RSCC-A) ist;
wobei ein zweiter Kondensator (C2a) mit zwei Anschlüssen des zweiten Brückenarms verbunden ist, wobei der zweite Kondensator ein Ausgangsfilterkondensator der ersten RSCC (RSCC-A) ist;
wobei ein dritter Kondensator (C1b) parallel mit zwei Anschlüssen des dritten Brückenarms verbunden ist, wobei der dritte Kondensator (C1b) ein Eingangsfilterkondensator der zweiten RSCC (RSCC-B) ist;
wobei ein vierter Kondensator (C2b) parallel mit zwei Anschlüssen des vierten Brückenarms verbunden ist, wobei der vierte Kondensator ein Ausgangsfilterkondensator der zweiten RSCC (RSCC-B) ist;
wobei der erste Kondensator (C1a) und der zweite Kondensator (C2a) in Reihe verbunden sind;
wobei der dritte Kondensator (C1b) und der vierte Kondensator (C2b) in Reihe verbunden sind;
wobei die zwei Schalttransistoren (S1A, S2A) des ersten Brückenarms in Reihe mit den zwei Schalttransistoren (S3A, S4A) des zweiten Brückenarms verbunden sind;
wobei die zwei Schalttransistoren (S1B, S2B) des dritten Brückenarms in Reihe mit den zwei Schalttransistoren (S3B, S4B) des vierten Brückenarms verbunden sind;
wobei ein erster Eingangsanschluss des resonanten Schaltkondensatorwandlers mit dem ersten Kondensator (C1a) und einem ersten Schalttransistor (S1A) der zwei Schalttransistoren des ersten Brückenarms verbunden ist und ein zweiter Eingangsanschluss des resonanten Kondensatorwandlers und ein erster Ausgangsanschluss des resonanten Kondensatorwandlers mit einem Mittelpunkt zwischen dem ersten Kondensator (C1a) und dem zweiten Kondensator (C1b) und einem Mittelpunkt zwischen einem zweiten Schalttransistor der zwei Schalttransistoren des ersten Brückenarms und einem dritten Schalttransistor (S3A) der zwei Schalttransistoren des zweiten Brückenarms verbunden sind; und ein zweiter Ausgangsanschluss des resonanten Kondensatorwandlers mit dem zweiten Kondensator (C2a) und einem vierten Schalttransistor der zwei Schalttransistoren des zweiten Brückenarms verbunden ist; und
die Steuervorrichtung dazu ausgelegt ist, einen Phasenverschiebungswinkel zwischen einem ersten Ansteuersignal der ersten RSCC und einem zweiten Ansteuersignal der zweiten RSCC (RSCC-B) basierend auf einer Stromdifferenz zwischen einem ersten Strom der ersten RSCC (RSCC-A) und einem zweiten Strom der zweiten RSCC (RSCC-B) anzupassen, sodass der erste Strom mit dem zweiten Strom übereinstimmt.

2. System nach Anspruch 1, wobei der Phasenverschiebungswinkel positiv mit der Stromdifferenz korreliert ist.

3. System nach Anspruch 1, wobei die Steuervorrichtung speziell dazu ausgelegt ist, eine Phase von mindestens einem des ersten Ansteuersignals und des zweiten Ansteuersignals anzupassen, um den Phasenverschiebungswinkel zwischen dem ersten Ansteuersignal und dem zweiten Ansteuersignal anzupassen.

4. System nach Anspruch 2 oder 3, wobei der Phasenverschiebungswinkel eine Summe aus einem voreingestellten festen Winkel und einem dynamisch anpassbaren Winkel ist und der voreingestellte feste Winkel gleich 0 ist; und
die Steuervorrichtung speziell dazu ausgelegt ist, den dynamisch anpassbaren Winkel basierend auf der Stromdifferenz anzupassen, um den Phasenverschiebungswinkel anzupassen.

5. System nach Anspruch 4, wobei die Steuervorrichtung speziell dazu ausgelegt ist: wenn der zweite Strom kleiner als der erste Strom ist, eine Phase des zweiten Ansteuersignals so zu steuern, dass sie einer Phase des ersten Ansteuersignals um den dynamisch anpassbaren Winkel vorauseilt; oder wenn der zweite Strom größer als der erste Strom ist, eine Phase des zweiten Ansteuersignals so zu steuern, dass sie hinter einer Phase des ersten Ansteuersignals um den dynamisch anpassbaren Winkel zurückbleibt.

6. System nach Anspruch 2 oder 3, wobei der Phasenverschiebungswinkel eine Summe aus einem voreingestellten festen Winkel und einem dynamisch anpassbaren Winkel ist und der voreingestellte feste Winkel gleich 360°/N ist, wobei N die Anzahl der parallel verbundenen RSCC ist, wobei N gleich 2 ist; und
die Steuervorrichtung speziell dazu ausgelegt ist, den dynamisch anpassbaren Winkel basierend auf der Stromdifferenz und dem voreingestellten festen Winkel anzupassen, um den Phasenverschiebungswinkel anzupassen.

7. System nach Anspruch 6, wobei die Steuervorrichtung speziell dazu ausgelegt ist: wenn der zweite Strom kleiner als der erste Strom ist, eine Phase des zweiten Ansteuersignals so zu steuern, dass sie hinter einer Phase des ersten Ansteuersignals um den dynamisch anpassbaren Winkel zurückbleibt; oder wenn der zweite Strom größer als der erste Strom ist, eine Phase des zweiten Ansteuersignals so zu steuern, dass sie einer Phase des ersten Ansteuersignals um den dynamisch anpassbaren Winkel vorauseilt.

8. System nach Anspruch 5 oder 7, wobei die Steuervorrichtung ferner dazu ausgelegt ist: wenn der dynamisch anpassbare Winkel größer als ein voreingestellter Schwellenwinkel ist, den dynamisch anpassbaren Winkel auf den voreingestellten Schwellenwinkel zu begrenzen.

9. System nach Anspruch 8, wobei wenn die Steuervorrichtung eine Phase eines des ersten Ansteuersignals und des zweiten Ansteuersignals anpasst, um den dynamisch anpassbaren Winkel anzupassen, der voreingestellte Schwellenwinkel kleiner oder gleich 30° ist.

10. System nach Anspruch 8, wobei wenn die Steuervorrichtung die Phase des ersten Ansteuersignals und die Phase des zweiten Ansteuersignals anpasst, um den dynamisch anpassbaren Winkel anzupassen, der voreingestellte Schwellenwinkel kleiner oder gleich 15° ist.

11. Stromausgleichssteuerungsverfahren, angewendet auf ein fotovoltaisches System, wobei das fotovoltaische System einen ersten DC/DC-Wandler (200), einen zweiten DC/DC-Wandler (100), einen resonanten Schaltkondensatorwandler (300), eine Fotovoltaikanordnung, einen Wechselrichter (2000) und eine Steuervorrichtung umfasst; wobei der Wechselrichter (2000) einen Plus-Eingangsanschluss des Wechselrichters, einen Minus-Eingangsanschluss des Wechselrichters und eine Neutralleitung des Wechselrichters umfasst; der Plus-Eingangsanschluss des Wechselrichters (2000) direkt mit dem Ausgangsanschluss des zweiten DC/DC-Wandlers (100) verbunden ist; ein Eingangsanschluss des ersten DC/DC-Wandlers (200) und des zweiten DC/DC-Wandlers (200) mit der Fotovoltaikanordnung verbunden sind; ein erster Eingangsanschluss des resonanten Schaltkondensatorwandlers (300) mit einem Plus-Ausgangsanschluss des ersten DC/DC-Wandlers (200) verbunden ist und ein zweiter Eingangsanschluss des resonanten Schaltkondensatorwandlers (300) mit einem Minus-Ausgangsanschluss des ersten DC/DC-Wandlers (200) verbunden ist; und ein erster Ausgangsanschluss des resonanten Schaltkondensatorwandlers (300) mit einer Neutralleitung des Wechselrichters (2000) verbunden ist, ein zweiter Ausgangsanschluss des resonanten Schaltkondensatorwandlers (300) mit einem Minus-Bus des Wechselrichters (2000) verbunden ist; die Neutralleitung des Wechselrichters (2000) dieselbe wie eine Neutralleitung des resonanten Schaltkondensatorwandlers (300) ist und eine Neutralleitung des Wechselrichters (2000) und die Neutralleitung des resonanten Schaltkondensatorwandlers (300) miteinander verbunden sind und gleiche Referenzpotenziale aufweisen; der Plus-Bus (BUS+), der mit dem ersten Eingangsanschluss des resonanten Schaltkondensatorwandlers (300) verbunden ist, sich von einem Bus unterscheidet, der mit dem Plus-Eingangsanschluss des Wechselrichters (2000) verbunden ist; und der resonante Schaltkondensatorwandler (300) mindestens die folgenden zwei parallel verbundenen resonanten Schaltkondensatorschaltungen, RSCC, umfasst: eine erste RSCC und eine zweite RSCC; wobei die erste RSCC (RSCC-A) einen ersten Brückenarm, einen zweiten Brückenarm und einen ersten LC-Resonanzkreis umfasst;
wobei der erste Brückenarm zwei in Reihe geschaltete Schalttransistoren (S1A, S2A) enthält, und der zweite Brückenarm zwei in Reihe geschaltete Schalttransistoren (S3A, S4A) enthält;
wobei die zwei im ersten Brückenarm enthaltenen Schalttransistoren (S1A, S2A) zwischen einem Plus-Bus (BUS+) und einer Neutralleitung (BUSN) verbunden sind und die zwei im zweiten Brückenarm enthaltenen Schalttransistoren (S3A, S4A) zwischen der Neutralleitung (BUSN) und einem Minus-Bus (BUS-) verbunden sind; wobei der erste LC-Resonanzkreis einen Resonanzkondensator (Cra) und eine Resonanzinduktivität (Lra), die in Reihe verbunden sind, enthält, und der Resonanzkondensator (Cra) mit einem Mittelpunkt des ersten Brückenarms verbunden ist, und die Resonanzinduktivität (Lra) mit einem Mittelpunkt des zweiten Brückenarms verbunden ist;
wobei sich der Mittelpunkt des ersten Brückenarms auf einen gemeinsamen Anschluss der Schalttransistoren (S1A, S2A) bezieht und sich der Mittelpunkt des zweiten Brückenarms auf einen gemeinsamen Anschluss der Schalttransistoren (S3A, S4A) bezieht;
wobei der Plus-Bus (BUS+) und die Neutralleitung (BUSN) den ersten Eingangsanschluss und den zweiten Eingangsanschluss des resonanten Schaltkondensatorwandlers (300) darstellen, und die Neutralleitung (BUSN) sowie der Minus-Bus (BUS-) den ersten Ausgangsanschluss und den zweiten Ausgangsanschluss des resonanten Schaltkondensatorwandlers (300) darstellen;
wobei die zweite RSCC (RSCC-B) einen dritten Brückenarm, einen vierten Brückenarm und einen zweiten LC-Resonanzkreis enthält;
wobei der dritte Brückenarm zwei in Reihe verbundene Schalttransistoren (S1B, S2B) enthält und der vierte Brückenarm zwei in Reihe geschaltete Schalttransistoren (S3B, S4B) enthält;
wobei die zwei im dritten Brückenarm enthaltenen Schalttransistoren (S1B, S2B) zwischen dem Plus-Bus (BUS+) und der Neutralleitung (BUSN) verbunden sind und die zwei im vierten Brückenarm enthaltenen Schalttransistoren (S3B, S4B) zwischen der Neutralleitung (BUSN) und dem Minus-Bus (BUS-) verbunden sind;
wobei der zweite LC-Resonanzkreis einen Resonanzkondensator (Crb) und eine Resonanzinduktivität (Lrb), die in Reihe verbunden sind, enthält, und der Resonanzkondensator (Crb) mit einem Mittelpunkt des dritten Brückenarms verbunden ist, und die Resonanzinduktivität (Lrb) mit einem Mittelpunkt des vierten Brückenarms verbunden ist;
wobei sich der Mittelpunkt des dritten Brückenarms auf einen gemeinsamen Anschluss der zwei im dritten Brückenarm enthaltenen Schalttransistoren (S1B, S2B) bezieht und sich der Mittelpunkt des vierten Brückenarms auf einen gemeinsamen Anschluss der zwei Schalttransistoren (S3B, S4B) des vierten Brückenarms bezieht;
wobei ein erster Kondensator (C1a) parallel mit zwei Anschlüssen des ersten Brückenarms verbunden ist, wobei der erste Kondensator ein Eingangsfilter der ersten RSCC ist;
wobei ein zweiter Kondensator (C2a) mit zwei Anschlüssen des zweiten Brückenarms verbunden ist, wobei der zweite Kondensator ein Ausgangsfilterkondensator der ersten RSCC (RSCC-A) ist;
wobei ein dritter Kondensator (C1b) parallel mit zwei Anschlüssen des dritten Brückenarms verbunden ist, wobei der dritte Kondensator (C1b) ein Eingangsfilterkondensator der zweiten RSCC (RSCC-B) ist;
wobei ein vierter Kondensator (C2b) parallel mit zwei Anschlüssen des vierten Brückenarms verbunden ist, wobei der vierte Kondensator ein Ausgangsfilterkondensator der zweiten RSCC (RSCC-B) ist;
wobei der erste Kondensator (C1a) und der zweite Kondensator (C2a) in Reihe verbunden sind;
wobei der dritte Kondensator (C1b) und der vierte Kondensator (C2b) in Reihe verbunden sind;
wobei die zwei Schalttransistoren (S1A, S2A) des ersten Brückenarms in Reihe mit den zwei Schalttransistoren (S3A, S4A) des zweiten Brückenarms verbunden sind;
wobei die zwei Schalttransistoren (S1B, S2B) des dritten Brückenarms in Reihe mit den zwei Schalttransistoren (S3B, S4B) des vierten Brückenarms verbunden sind;
wobei ein erster Eingangsanschluss des resonanten Schaltkondensatorwandlers mit dem ersten Kondensator (C1a) und einem ersten Schalttransistor (S1A) der zwei Schalttransistoren des ersten Brückenarms verbunden ist und ein zweiter Eingangsanschluss des resonanten Kondensatorwandlers und ein erster Ausgangsanschluss des resonanten Kondensatorwandlers mit einem Mittelpunkt zwischen dem ersten Kondensator (C1a) und dem zweiten Kondensator (C1b) und einem Mittelpunkt zwischen einem zweiten Schalttransistor der zwei Schalttransistoren des ersten Brückenarms und einem dritten Schalttransistor (S3A) der zwei Schalttransistoren des zweiten Brückenarms verbunden sind; und ein zweiter Ausgangsanschluss des resonanten Kondensatorwandlers mit dem zweiten Kondensator (C2a) und einem vierten Schalttransistor der zwei Schalttransistoren des zweiten Brückenarms verbunden ist; und
wobei das Verfahren Folgendes umfasst:
Erhalten (S2701) eines ersten Stroms der ersten RSCC (RSCC-A) und Erhalten eines zweiten Stroms der zweiten RSCC; und
Anpassen (S2703) eines Phasenverschiebungswinkels zwischen einem ersten Ansteuersignal der ersten RSCC (RSCC-A) und einem zweiten Ansteuersignal der zweiten RSCC (RSCC-B) basierend auf einer Stromdifferenz zwischen dem ersten Strom der ersten RSCC (RSCC-A) und dem zweiten Strom der zweiten RSCC (RSCC-B), sodass der erste Strom mit dem zweiten Strom übereinstimmt.

12. Verfahren nach Anspruch 11, wobei der Phasenverschiebungswinkel positiv mit der Stromdifferenz korreliert ist.

## Revendications

1. Système photovoltaïque, comprenant un premier convertisseur CC/CC (200), un second convertisseur CC/CC (100), un convertisseur à condensateur commuté résonant (300), un onduleur (2000), un réseau photovoltaïque, et une unité de commande, dans lequel
une borne d'entrée du premier convertisseur CC/CC (200) et une borne d'entrée du second convertisseur CC/CC (100) sont connectées au réseau photovoltaïque ;
dans lequel l'onduleur (2000) comprend une borne d'entrée positive de l'onduleur, une borne d'entrée négative de l'onduleur (2000), et un fil neutre de l'onduleur (2000) ;
dans lequel la borne d'entrée positive de l'onduleur (2000) est directement connectée à la borne de sortie du second convertisseur CC/CC (100) ;
une première borne d'entrée du convertisseur à condensateur commuté résonant (300) est connectée à une borne de sortie positive du premier convertisseur CC/CC (200), et une seconde borne d'entrée du convertisseur à condensateur commuté résonant (300) est connectée à une borne de sortie négative du premier convertisseur CC/CC (200) ;
une première borne de sortie du convertisseur à condensateur commuté résonant (300) est connectée à un fil neutre de l'onduleur (2000), une seconde borne de sortie du convertisseur à condensateur commuté résonant (300) est connectée à un bus négatif de l'onduleur (2000), et le convertisseur à condensateur commuté résonant (300) comprend au moins les deux circuits à condensateur commuté résonant, « Resonant Switched Capacitor Circuits » RSCC, suivants connectés en parallèle : un premier RSCC (RSCC-A) et un second RSCC (RSCC-B) ;
dans lequel le premier RSCC (RSCC-A) comprend un premier bras-pont, un deuxième bras-pont, et un premier circuit résonant LC ;
dans lequel le premier bras-pont inclut deux transistors de commutation (S1A, S2A) connectés en série, et le deuxième bras-pont inclut deux transistors de commutation (S3A, S4A) connectés en série ;
dans lequel deux transistors de commutation (S1A, S2A) inclus dans le premier bras-pont sont connectés entre un bus positif (BUS+) et un fil neutre (BUSN), et les deux transistors de commutation (S3A, S4A) inclus dans le deuxième bras-pont sont connectés entre le fil neutre (BUSN) et un bus négatif (BUS-) ;
dans lequel le premier circuit résonant LC inclut un condensateur résonant (Cra) et un inducteur résonant (Lra) connectés en série, et le condensateur résonant (Cra) est connecté à un point médian du premier bras-pont et l'inducteur résonant (Lra) est connecté à un point médian du deuxième bras-pont ;
dans lequel le point médian du premier bras-pont désigne une borne commune de transistors de commutation (S1A, S2A), et le point médian du deuxième bras-pont désigne une borne commune de transistors de commutation (S3A, S4A) ;
dans lequel le bus positif (BUS+) et le fil neutre (BUSN) représentent la première borne d'entrée et la seconde borne d'entrée du convertisseur à condensateur commuté résonant (300), et le fil neutre (BUSN) et le bus négatif (BUS-) représentent la première borne de sortie et la seconde borne de sortie du convertisseur à condensateur commuté résonant (300) ;
dans lequel le fil neutre de l'onduleur (2000) est le même qu'un fil neutre du convertisseur à condensateur commuté résonant (300), et le fil neutre de l'onduleur (2000) et le fil neutre du convertisseur à condensateur commuté résonant (300) sont connectés ensemble et ont des potentiels de référence égaux ;
dans lequel le bus positif (BUS+) connecté à la première borne d'entrée du convertisseur à condensateur commuté résonant (300) est différent d'un bus connecté à la borne d'entrée positive de l'onduleur (2000) ;
dans lequel le second RSCC (RSCC-B) inclut un troisième bras-pont, un quatrième bras-pont, et un second circuit résonant LC ;
dans lequel le troisième bras-pont inclut deux transistors de commutation (S1B, S2B) connectés en série, et le quatrième bras-pont inclut deux transistors de commutation (S3B, S4B) connectés en série ;
dans lequel les deux transistors de commutation (S1B, S2B) inclus dans le troisième bras-pont sont connectés entre le bus positif (BUS+) et le fil neutre (BUSN), et les deux transistors de commutation (S3B, S4B) inclus dans le quatrième bras-pont sont connectés entre le fil neutre (BUSN) et le bus négatif (BUS-) ;
dans lequel le second circuit résonant LC inclut un condensateur résonant (Crb) et un inducteur résonant (Lrb) connectés en série, et le condensateur résonant (Crb) est connecté à un point médian du troisième bras-pont et l'inducteur résonant (Lra) est connecté à un point médian du quatrième bras-pont ;
dans lequel le point médian du troisième bras-pont désigne une borne commune des deux transistors de commutation (S1B, S2B) inclus dans le troisième bras-pont, et le point médian du quatrième bras-pont désigne une borne commune des deux transistors de commutation (S3B, S4B) du quatrième bras-pont ;
dans lequel un premier condensateur (C1a) est connecté en parallèle à deux bornes du premier bras-pont, le premier condensateur étant un filtre d'entrée du premier RSCC (RSCC-A) ;
dans lequel un deuxième condensateur (C2a) est connecté à deux bornes du deuxième bras-pont, le deuxième condensateur étant un condensateur-filtre de sortie du premier RSCC (RSCC-A) ;
dans lequel un troisième condensateur (C1b) est connecté en parallèle à deux bornes du troisième bras-pont, le troisième condensateur (C1b) étant un condensateur-filtre d'entrée du second RSCC (RSCC-B) ;
dans lequel un quatrième condensateur (C2b) est connecté en parallèle à deux bornes du quatrième bras-pont, le quatrième condensateur étant un condensateur-filtre de sortie du second RSCC (RSCC-B) ;
dans lequel le premier condensateur (C1a) et le deuxième condensateur (C2a) sont connectés en série ;
dans lequel le troisième condensateur (C1b) et le quatrième condensateur (C2b) sont connectés en série ;
dans lequel les deux transistors de commutation (S1A, S2A) du premier bras-pont sont connectés en série avec les deux transistors de commutation (S3A, S4A) du deuxième bras-pont ;
dans lequel les deux transistors de commutation (S1B, S2B) du troisième bras-pont sont connectés en série avec les deux transistors de commutation (S3B, S4B) du quatrième bras-pont ;
dans lequel une première borne d'entrée du convertisseur à condensateur commuté résonant est connectée au premier condensateur (C1a) et à un premier transistor de commutation (S1A) des deux transistors de commutation du premier bras-pont, et une seconde borne d'entrée du convertisseur à condensateur résonant et une première borne de sortie du convertisseur à condensateur résonant sont connectées à un point médian entre le premier condensateur (C1a) et le deuxième condensateur (C1b) et à un point médian entre un deuxième transistor de commutation des deux transistors de commutation du premier bras-pont et un troisième transistor de commutation (S3A) des deux transistors de commutation du deuxième bras-pont ; et une seconde borne de sortie du convertisseur à condensateur résonant est connectée au deuxième condensateur (C2a) et à un quatrième transistor de commutation des deux transistors de commutation du deuxième bras-pont ; et
l'unité de commande est configurée pour ajuster un angle de déphasage entre un premier signal d'excitation du premier RSCC et un second signal d'excitation du second RSCC (RSCC-B) sur la base d'une différence de courant entre un premier courant du premier RSCC (RSCC-A) et un second courant du second RSCC (RSCC-B), de telle sorte que le premier courant corresponde au second courant.

2. Système selon la revendication 1, dans lequel l'angle de déphasage est positivement corrélé avec la différence de courant.

3. Système selon la revendication 1, dans lequel l'unité de commande est spécifiquement configurée pour ajuster une phase d'au moins un du premier signal d'excitation et du second signal d'excitation pour ajuster l'angle de déphasage entre le premier signal d'excitation et le second signal d'excitation.

4. Système selon la revendication 2 ou 3, dans lequel l'angle de déphasage est une somme d'un angle fixe prédéfini et d'un angle dynamiquement ajustable, et l'angle fixe prédéfini est 0 ; et
l'unité de commande est spécifiquement configurée pour ajuster l'angle dynamiquement ajustable sur la base de la différence de courant pour ajuster l'angle de déphasage.

5. Système selon la revendication 4, dans lequel l'unité de commande est spécifiquement configurée pour : lorsque le second courant est inférieur au premier courant, commander une phase du second signal d'excitation pour qu'elle mène une phase du premier signal d'excitation selon l'angle dynamiquement ajustable ; ou, lorsque le second courant est supérieur au premier courant, commander une phase du second signal d'excitation pour qu'elle soit derrière une phase du premier signal d'excitation selon l'angle dynamiquement ajustable.

6. Système selon la revendication 2 ou 3, dans lequel l'angle de déphasage est une somme d'un angle fixe prédéfini et d'un angle dynamiquement ajustable, et l'angle fixe prédéfini est 360°/N, dans lequel N est une quantité de RSCC connectés en parallèle, dans lequel N est égal à 2 ; et
l'unité de commande est spécifiquement configurée pour ajuster l'angle dynamiquement ajustable sur la base de la différence de courant et de l'angle fixe prédéfini pour ajuster l'angle de déphasage.

7. Système selon la revendication 6, dans lequel l'unité de commande est spécifiquement configurée pour : lorsque le second courant est inférieur au premier courant, commander une phase du second signal d'excitation pour qu'elle soit derrière une phase du premier signal d'excitation selon l'angle dynamiquement ajustable ; ou, lorsque le second courant est supérieur au premier courant, commander une phase du second signal d'excitation pour qu'elle mène une phase du premier signal d'excitation selon l'angle dynamiquement ajustable.

8. Système selon la revendication 5 ou 7, dans lequel l'unité de commande est en outre configurée pour : lorsque l'angle dynamiquement ajustable est supérieur à un angle seuil prédéfini, commander l'angle dynamiquement ajustable pour qu'il soit l'angle seuil prédéfini.

9. Système selon la revendication 8, dans lequel, lorsque l'unité de commande ajuste une phase d'un du premier signal d'excitation et du second signal d'excitation pour ajuster l'angle dynamiquement ajustable, l'angle seuil prédéfini est inférieur ou égal à 30°.

10. Système selon la revendication 8, dans lequel, lorsque l'unité de commande ajuste la phase du premier signal d'excitation et la phase du second signal d'excitation pour ajuster l'angle dynamiquement ajustable, l'angle seuil prédéfini est inférieur ou égal à 15°.

11. Procédé de commande d'égalisation de courant, appliqué à un système photovoltaïque, dans lequel le système photovoltaïque comprend un premier convertisseur CC/CC (200), un second convertisseur CC/CC (100), un convertisseur à condensateur commuté résonant (300), un réseau photovoltaïque, un onduleur (2000) et une unité de commande ; l'onduleur (2000) comprenant une borne d'entrée positive de l'onduleur, une borne d'entrée négative de l'onduleur, et un fil neutre de l'onduleur ; la borne d'entrée positive de l'onduleur (2000) est directement connectée à la borne de sortie du second convertisseur CC/CC (100) ; une borne d'entrée du premier convertisseur CC/CC (200) et du second convertisseur CC/CC (200) est connectée au réseau photovoltaïque, une première borne d'entrée du convertisseur à condensateur commuté résonant (300) est connectée à une borne de sortie positive du premier convertisseur CC/CC (200), et une seconde borne d'entrée du convertisseur à condensateur commuté résonant (300) est connectée à une borne de sortie négative du premier convertisseur CC/CC (200) ; et une première borne de sortie du convertisseur à condensateur commuté résonant (300) est connectée à un fil neutre de l'onduleur (2000), une seconde borne de sortie du convertisseur à condensateur commuté résonant (300) est connectée à un bus négatif de l'onduleur (2000), le fil neutre de l'onduleur (2000) est le même qu'un fil neutre du convertisseur à condensateur commuté résonant (300), et le fil neutre de l'onduleur (2000) et le fil neutre du convertisseur à condensateur commuté résonant (300) sont connectés ensemble et ont des potentiels de référence égaux ; le bus positif (BUS+) connecté à la première borne d'entrée du convertisseur à condensateur commuté résonant (300) est différent d'un bus connecté à la borne d'entrée positive de l'onduleur (2000) ; et le convertisseur à condensateur commuté résonant (300) comprend au moins les deux circuits à condensateur commuté résonant, « Resonant Switched Capacitor Circuits » RSCC, suivants connectés en parallèle : un premier RSCC et un second RSCC ; dans lequel le premier RSCC (RSCC-A) comprend un premier bras-pont, un deuxième bras-pont, et un premier circuit résonant LC ;
dans lequel le premier bras-pont inclut deux transistors de commutation (S1A, S2A) connectés en série, et le deuxième bras-pont inclut deux transistors de commutation (S3A, S4A) connectés en série ;
dans lequel deux transistors de commutation (S1A, S2A) inclus dans le premier bras-pont sont connectés entre un bus positif (BUS+) et un fil neutre (BUSN), et les deux transistors de commutation (S3A, S4A) inclus dans le deuxième bras-pont sont connectés entre le fil neutre (BUSN) et un bus négatif (BUS-) ;
dans lequel le premier circuit résonant LC inclut un condensateur résonant (Cra) et un inducteur résonant (Lra) connectés en série, et le condensateur résonant (Cra) est connecté à un point médian du premier bras-pont et l'inducteur résonant (Lra) est connecté à un point médian du deuxième bras-pont ;
dans lequel le point médian du premier bras-pont désigne une borne commune de transistors de commutation (S1A, S2A), et le point médian du deuxième bras-pont désigne une borne commune de transistors de commutation (S3A, S4A) ;
dans lequel le bus positif (BUS+) et le fil neutre (BUSN) représentent la première borne d'entrée et la seconde borne d'entrée du convertisseur à condensateur commuté résonant (300), et le fil neutre (BUSN) et le bus négatif (BUS-) représentent la première borne de sortie et la seconde borne de sortie du convertisseur à condensateur commuté résonant (300) ;
dans lequel le second RSCC (RSCC-B) inclut un troisième bras-pont, un quatrième bras-pont, et un second circuit résonant LC ;
dans lequel le troisième bras-pont inclut deux transistors de commutation (S1B, S2B) connectés en série, et le quatrième bras-pont inclut deux transistors de commutation (S3B, S4B) connectés en série ;
dans lequel les deux transistors de commutation (S1B, S2B) inclus dans le troisième bras-pont sont connectés entre le bus positif (BUS+) et le fil neutre (BUSN), et les deux transistors de commutation (S3B, S4B) inclus dans le quatrième bras-pont sont connectés entre le fil neutre (BUSN) et le bus négatif (BUS-) ;
dans lequel le second circuit résonant LC inclut un condensateur résonant (Crb) et un inducteur résonant (Lrb) connectés en série, et le condensateur résonant (Crb) est connecté à un point médian du troisième bras-pont et l'inducteur résonant (Lra) est connecté à un point médian du quatrième bras-pont ;
dans lequel le point médian du troisième bras-pont désigne une borne commune des deux transistors de commutation (S1B, S2B) inclus dans le troisième bras-pont, et le point médian du quatrième bras-pont désigne une borne commune des deux transistors de commutation (S3B, S4B) du quatrième bras-pont ;
dans lequel un premier condensateur (C1a) est connecté en parallèle à deux bornes du premier bras-pont, le premier condensateur étant un filtre d'entrée du premier RSCC ;
dans lequel un deuxième condensateur (C2a) est connecté à deux bornes du deuxième bras-pont, le deuxième condensateur étant un condensateur-filtre de sortie du premier RSCC (RSCC-A) ;
dans lequel un troisième condensateur (C1b) est connecté en parallèle à deux bornes du troisième bras-pont, le troisième condensateur (C1b) étant un condensateur-filtre d'entrée du second RSCC (RSCC-B) ;
dans lequel un quatrième condensateur (C2b) est connecté en parallèle à deux bornes du quatrième bras-pont, le quatrième condensateur étant un condensateur-filtre de sortie du second RSCC (RSCC-B) ;
dans lequel le premier condensateur (C1a) et le deuxième condensateur (C2a) sont connectés en série ;
dans lequel le troisième condensateur (C1b) et le quatrième condensateur (C2b) sont connectés en série ;
dans lequel les deux transistors de commutation (S1A, S2A) du premier bras-pont sont connectés en série avec les deux transistors de commutation (S3A, S4A) du deuxième bras-pont ;
dans lequel les deux transistors de commutation (S1B, S2B) du troisième bras-pont sont connectés en série avec les deux transistors de commutation (S3B, S4B) du quatrième bras-pont ;
dans lequel une première borne d'entrée du convertisseur à condensateur commuté résonant est connectée au premier condensateur (C1a) et à un premier transistor de commutation (S1A) des deux transistors de commutation du premier bras-pont, et une seconde borne d'entrée du convertisseur à condensateur résonant et une première borne de sortie du convertisseur à condensateur résonant sont connectées à un point médian entre le premier condensateur (C1a) et le deuxième condensateur (C1b) et à un point médian entre un deuxième transistor de commutation des deux transistors de commutation du premier bras-pont et un troisième transistor de commutation (S3A) des deux transistors de commutation du deuxième bras-pont ; et une seconde borne de sortie du convertisseur à condensateur résonant est connectée au deuxième condensateur (C2a) et à un quatrième transistor de commutation des deux transistors de commutation du deuxième bras-pont ; et
le procédé comprend :
l'obtention (S2701) d'un premier courant du premier RSCC (RSCC-A), et l'obtention d'un second courant du second RSCC ; et
l'ajustement (S2703) d'un angle de déphasage entre un premier signal d'excitation du premier RSCC (RSCC-A) et un second signal d'excitation du second RSCC (RSCC-B) sur la base d'une différence de courant entre le premier courant du premier RSCC (RSCC-A) et le second courant du second RSCC (RSCC-B), de telle sorte que le premier courant corresponde au second courant.

12. Procédé selon la revendication 11, dans lequel l'angle de déphasage est positivement corrélé avec la différence de courant.
